(19) Europäisches Patentamt
European Patent Office
Office européen des brevets

(11) EP 4 465 549 A1

(12) EUROPEAN PATENT APPLICATION
published in accordance with Art. 153(4) EPC

(43) Date of publication:
20.11.2024 Bulletin 2024/47

(51) International Patent Classification (IPC):
H04B 7/06 (2006.01)

(21) Application number: 23752344.4

(22) Date of filing: 07.02.2023

(52) Cooperative Patent Classification (CPC):
H04B 7/0456; H04B 7/06; Y02D 30/70

(86) International application number:
PCT/CN2023/074849

(87) International publication number:
WO 2023/151564 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.02.2022 CN 202210129284

(71) Applicant: Huawei Technologies Co., Ltd.
Shenzhen, Guangdong 518129 (CN)

(72) Inventors:
• YANG, Pei
  Shenzhen, Guangdong 518129 (CN)
• LI, Tie
  Shenzhen, Guangdong 518129 (CN)
• LIU, Jianghua
  Shenzhen, Guangdong 518129 (CN)

(74) Representative: Gill Jennings & Every LLP
The Broadgate Tower
20 Primrose Street
London EC2A 2ES (GB)

(54) COMMUNICATION METHOD, APPARATUS AND SYSTEM

(57) This application provides a communication method, apparatus, and system, so that each antenna panel can perform independent power control, making power control more accurate, and improving information transmission efficiency. The method includes: A terminal device obtains a first parameter corresponding to each of a plurality of antenna panels; determines, based on the first parameter corresponding to each of the plurality of antenna panels, a power control parameter set corresponding to each of the plurality of antenna panels; determines, based on the power control parameter set corresponding to each antenna panel, power for transmitting information on each antenna panel; and transmits information on each antenna panel based on the power for transmitting information on each antenna panel.

S1401 A terminal device obtains a first parameter corresponding to each of a plurality of antenna panels

S1402 The terminal device determines, based on the first parameter corresponding to each of the plurality of antenna panels, a power control parameter set corresponding to each of the plurality of antenna panels

S1403 The terminal device determines, based on the power control parameter set corresponding to each antenna panel, power for transmitting information on each antenna panel

S1404 The terminal device transmits information on each antenna panel based on the power for transmitting information on each antenna panel

FIG. 14

Processed by Luminess, 75001 PARIS (FR)

## Description

This application claims priority to Chinese Patent Application No. 202210129284.9, filed with the China National Intellectual Property Administration on February 11, 2022 and entitled "COMMUNICATION METHOD, APPARATUS, AND SYSTEM", which is incorporated herein by reference in its entirety.

## TECHNICAL FIELD

This application relates to the communication field, and in particular, to a communication method, apparatus, and system.

## BACKGROUND

To meet requirements of three scenarios, compared with a long term evolution (long term evolution, LTE) system, a new radio (new radio, NR) system has a newly added high frequency band, implementing a larger bandwidth and a higher transmission rate. Due to a high frequency, a signal is severely attenuated during spatial propagation, which severely limits signal coverage. Therefore, NR uses a beamforming (beamforming, BF) technology to obtain a good directional gain, increase directional power in a transmit direction, and increase a signal to interference plus noise ratio (signal to interference plus noise ratio, SINR), thereby improving system performance.

In an implementation process of the beamforming technology, an antenna panel (Antenna panel) is a core component. A beam is sent or received by using the antenna panel. During implementation of NR deployment, because a directional beam is used, both a base station and a terminal need to be deployed by using a plurality of antenna panels to meet wide-area coverage.

Because coverage needs to be met in a case of limited space and cost saving, deployment and design of an antenna panel of the terminal are particularly important. Therefore, it is necessary to discuss an issue related to a plurality of antenna panels of the terminal.

## SUMMARY

This application provides a communication method, apparatus, and system, to implement antenna panel selection, codeword mapping, or power control of a specific panel in a multi-antenna-panel scenario.

According to a first aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: obtaining first information, where the first information is used to determine N antenna panels, the N antenna panels are used to transmit second information, and N is a positive integer greater than or equal to 1; and transmitting the second information by using the N antenna panels.

In a multi-antenna-panel scenario, an antenna panel used for transmission may be determined in a beam management process performed by the terminal device and a network device. However, there is a time interval between the beam management process and actual transmission, and channel quality corresponding to an antenna panel selected in the beam management process may be poor during actual transmission. Based on this solution, during information transmission, the terminal device may determine, by using the first information, one or more antenna panels used for information transmission, and perform information transmission by using the one or more antenna panels, to implement antenna panel selection. This can prevent information transmission from being performed by using an antenna panel with poor channel quality, thereby improving information transmission efficiency. In addition, switching between transmission by using some antenna panels of the terminal device and transmission by using all antenna panels of the terminal device may be implemented through antenna panel selection.

With reference to the first aspect, in an implementation of the first aspect, that the first information is used to determine N antenna panels includes: The first information includes a plurality of identifiers, each of the plurality of identifiers indicates whether one of a plurality of antenna panels is available, and the plurality of antenna panels include at least the N antenna panels.

Based on this implementation, when each of the plurality of identifiers indicates whether one antenna panel is available, if a number of the plurality of identifiers is the same as a number of the plurality of antenna panels, whether each antenna panel is available may be directly and clearly indicated, thereby reducing complexity of determining, by the terminal device based on an identifier, whether an antenna panel is available.

With reference to the first aspect, in an implementation of the first aspect, each of the plurality of identifiers is used for physical uplink shared channel PUSCH transmission.

Based on this implementation, the identifier used for PUSCH transmission indicates whether an antenna panel is available, so that an extra bit can be prevented from being occupied to indicate whether an antenna panel is available, thereby reducing signaling overheads.

With reference to the first aspect, in an implementation of the first aspect, the identifier is a modulation and coding scheme MCS field or a transmission precoding matrix indicator TPMI field.

Based on this implementation, the MCS field or the TPMI field indicates whether an antenna panel is available, and whether an antenna panel is available may be indicated while an MCS or a TMPI is indicated, thereby reducing signaling overheads.

With reference to the first aspect, in an implementation of the first aspect, that each of the plurality of identifiers indicates whether one of a plurality of antenna panels is available includes: When an identifier value associated with an antenna panel i belongs to a first value set, the antenna panel i is available; or when the identifier value associated with the antenna panel i belongs to a second value set, the antenna panel i is unavailable. The antenna panel i is one of the plurality of antenna panels, the first value set is a set associated with the antenna panel i, and the second value set is a set associated with the antenna panel i, where i is a natural number. Based on this implementation, a value of an identifier may be used to determine whether an associated antenna panel is available.

With reference to the first aspect, in an implementation of the first aspect, the plurality of antenna panels are associated with a same PUSCH, and each of the plurality of antenna panels can be used to transmit at least one layer of the PUSCH; and/or each of the N antenna panels is used to transmit the at least one layer of the same PUSCH.

With reference to the first aspect, in an implementation of the first aspect, the plurality of identifiers included in the first information is carried in same first signaling, and the first signaling is one of downlink control information DCI, a radio resource control RRC information element, and a media access control control element MAC CE.

With reference to the first aspect, in an implementation of the first aspect, each of the plurality of antenna panels is associated with one PUSCH; and/or each of the N antenna panels is used for transmission of one PUSCH.

With reference to the first aspect, in an implementation of the first aspect, at least two of the plurality of identifiers are carried in different signaling, and the signaling is one or more of DCI, an RRC information element, and a MAC CE.

With reference to the first aspect, in an implementation of the first aspect, each of the plurality of antenna panels is used for physical uplink control channel PUCCH or sounding reference signal SRS transmission.

With reference to the first aspect, in an implementation of the first aspect, the plurality of identifiers are carried in at least one MAC CE, and the MAC CE indicates a spatial relation of PUCCH or SRS transmission.

With reference to the first aspect, in an implementation of the first aspect, that the first information is used to determine N antenna panels includes: The first information includes one identifier, the one identifier indicates whether a plurality of antenna panels are available, and the plurality of antenna panels include at least the N antenna panels. Based on this implementation, the one identifier indicates whether the plurality of antenna panels are available, thereby reducing signaling overheads.

With reference to the first aspect, in an implementation of the first aspect, that the first information is used to determine N antenna panels includes: The first information indicates the N antenna panels.

With reference to the first aspect, in an implementation of the first aspect, that the first information is used to determine N antenna panels includes: The N antenna panels are N of K antenna panels, and the first information indicates K-N unavailable antenna panels in the K antenna panels, where K is a positive integer greater than or equal to N.

According to a second aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: obtaining at least two codewords; mapping each of the at least two codewords to at least one layer of one PUSCH; and transmitting each codeword at the at least one layer of the one PUSCH by using one antenna panel.

Based on this solution, each codeword is mapped to at least one layer of one PUSCH and is transmitted by using one antenna panel. In this way, an MCS of a codeword transmitted on a specific antenna panel may be matched based on a channel that the antenna panel passes through, thereby resolving panel MCS imbalance, and improving transmission efficiency.

With reference to the second aspect, in an implementation of the second aspect, the at least two codewords are a first codeword and a second codeword, the first codeword is mapped to n1 layers of a first PUSCH, and the second codeword is mapped to n2 layers of the first PUSCH. The transmitting each codeword at the at least one layer of the one PUSCH by using one antenna panel includes: transmitting the first codeword at the n1 layers of the first PUSCH by using one antenna panel in two antenna panels; and transmitting the second codeword at the n2 layers of the first PUSCH by using the other antenna panel in the two antenna panels, where n1 and n2 are positive integers.

With reference to the second aspect, in an implementation of the second aspect, the at least two codewords are a first codeword and a second codeword, the first codeword is mapped to at least one layer of a second PUSCH, and the second codeword is mapped to at least one layer of a third PUSCH. The transmitting each codeword at the at least one layer of the one PUSCH by using one antenna panel includes: transmitting the first codeword at the at least one layer of the second PUSCH by using one antenna panel in two antenna panels; and transmitting the second codeword at the at least one layer of the third PUSCH by using the other antenna panel in the two antenna panels.

With reference to the second aspect, in an implementation of the second aspect, the at least two codewords are a first codeword and a second codeword, the first codeword is mapped to n1 layers of a first PUSCH, and the second codeword is mapped to n2 layers of the first PUSCH. The transmitting each codeword at the at least one layer of the one PUSCH by using one antenna panel includes: transmitting the first codeword and the second codeword at the n1 layers of the first PUSCH and the n2 layers of the first PUSCH by using a same antenna panel, where n1 and n2 are positive integers, and a sum of n1 and n2 is greater than or equal to a first threshold.

With reference to the second aspect, in an implementation of the second aspect, the first codeword corresponds to a first MCS, and the second codeword corresponds to a second MCS, where the first MCS and the second MCS are different.

According to a third aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: obtaining a first parameter corresponding to each of a plurality of antenna panels; determining, based on the first parameter corresponding to each of the plurality of antenna panels, a power control parameter set corresponding to each of the plurality of antenna panels; determining, based on the power control parameter set corresponding to each antenna panel, power for transmitting information on each antenna panel; and transmitting information on each antenna panel based on the power for transmitting information on each antenna panel.

Based on this solution, the terminal device determines, based on the first parameter, the power control parameter set corresponding to each of the plurality of antenna panels, and determines the power that is for transmitting information and that corresponds to each of the plurality of antenna panels, so that power for transmitting information on different antenna panels can be independently calculated, that is, each antenna panel can perform independent power control, making power control more accurate, thereby improving information transmission efficiency.

With reference to the third aspect, in an implementation of the third aspect, the plurality of antenna panels are two antenna panels; and the determining, based on the power control parameter set corresponding to each antenna panel, power for transmitting information on each antenna panel includes: determining first power based on a power control parameter set corresponding to one antenna panel in the two antenna panels and maximum transmit power of a communication device, where the first power is power for transmitting information on the one antenna panel; and determining second power based on a power parameter set corresponding to the other antenna panel in the two antenna panels and the maximum transmit power of the communication device, where the second power is power for transmitting information on the other antenna panel.

With reference to the third aspect, in an implementation of the third aspect, the power control parameter set corresponding to the one antenna panel is used to determine third power, and the power parameter set corresponding to the other antenna panel is used to determine fourth power; and when a sum of the third power and the fourth power is less than or equal to the maximum transmit power of the communication device, the first power is equal to the third power, and the second power is equal to the fourth power; or when the sum of the third power and the fourth power is greater than the maximum transmit power of the communication device, the first power is determined based on the third power, the fourth power, and the maximum transmit power, and/or the second power is determined based on the third power, the fourth power, and the maximum transmit power.

Based on this possible implementation, when power control is independently performed on an antenna panel, a value relationship between a sum of power for all antenna panels and the maximum transmit power of the terminal device is considered, so that the sum of the power for transmitting information on all the antenna panels is finally less than or equal to the maximum transmit power of the communication device.

With reference to the third aspect, in an implementation of the third aspect, when the sum of the third power and the fourth power is greater than the maximum transmit power of the communication device, the maximum transmit power, the third power, the first power, the fourth power, and the second power satisfy the following formula:

$$P_1 = P_3 \cdot P_{\max} / (P_3 + P_4), P_2 = P_4 \cdot P_{\max} / (P_3 + P_4);$$

or

$$P_1 = P_3 - \left[ (P_3 + P_4 - P_{\max})/2 \right], P_2 = P_4 - \left[ (P_3 + P_4 - P_{\max}) \right]/2,$$

where

$P_{\max}$ is the maximum transmit power, $P_1$ is the first power, $P_2$ is the second power, $P_3$ is the third power, and $P_4$ is the fourth power.

With reference to the third aspect, in an implementation of the third aspect, the power control parameter set corresponding to the one antenna panel is used to determine third power, and the power parameter set corresponding to the other antenna panel is used to determine fourth power; and when a sum of the third power and the fourth power is greater than the maximum transmit power of the communication device, and the third power is less than the fourth power, the first power is equal to the third power, and the second power satisfies the following formula:

$$P_2 = P_4 - \left(P_3 + P_4 - P_{\max}\right),$$

where
$P_{\max}$ is the maximum transmit power, $P_1$ is the first power, $P_2$ is the second power, $P_3$ is the third power, and $P_4$ is the fourth power.

With reference to the third aspect, in an implementation of the third aspect, the power control parameter set corresponding to the one antenna panel is used to determine third power, and the power parameter set corresponding to the other antenna panel is used to determine fourth power; and when a sum of the third power and the fourth power is greater than the maximum transmit power of the communication device, and a path loss of the one antenna panel is less than a path loss of the other antenna panel, the first power is equal to the third power, and the second power satisfies the following formula:

$$P_2 = P_4 - \left(P_3 + P_4 - P_{\max}\right),$$

where
$P_{\max}$ is the maximum transmit power, $P_1$ is the first power, $P_2$ is the second power, $P_3$ is the third power, and $P_4$ is the fourth power.

With reference to the third aspect, in an implementation of the third aspect, the plurality of antenna panels are two antenna panels; and the determining, based on the power control parameter set corresponding to each antenna panel, power for transmitting information on each antenna panel includes: determining first power based on a power control parameter set of one antenna panel in the two antenna panels and maximum transmit power of the one antenna panel, where the first power is power for transmitting information on the one antenna panel; and determining second power based on a power control parameter set of the other antenna panel in the two antenna panels and maximum transmit power of the other antenna panel, where the second power is power for transmitting information on the other antenna panel.

With reference to the third aspect, in an implementation of the third aspect, the first power is a smallest value in third power and the maximum transmit power of the one antenna panel, where the third power is determined based on the power control parameter set of the one antenna panel; and the second power is a smallest value in fourth power and the maximum transmit power of the other antenna panel, where the fourth power is determined based on the power control parameter set of the other antenna panel.

Based on this possible implementation, when power control is independently performed on an antenna panel, a value relationship between power for transmitting information on each antenna panel and maximum transmit power of the antenna panel is considered, so that the power for transmitting information on the antenna panel is finally less than or equal to the maximum transmit power of the antenna panel.

With reference to the third aspect, in an implementation of the third aspect, the transmitting information on each antenna panel based on the power for transmitting information on each antenna panel includes: transmitting n1 layers of data of a first physical uplink shared channel PUSCH on the one antenna panel based on the first power, and transmitting n2 layers of data of the first PUSCH on the other antenna panel based on the second power.

With reference to the third aspect, in an implementation of the third aspect, the first power is evenly allocated to n1 layers of the first PUSCH, and the second power is evenly allocated to n2 layers of the first PUSCH.

With reference to the third aspect, in an implementation of the third aspect, when n1 is greater than a second threshold, the power control parameter set corresponding to the one antenna panel does not include a modulation and coding scheme MCS used to transmit the n1 layers of data of the first PUSCH, or power control of the one antenna panel is unrelated to the MCS used to transmit the n1 layers of data of the first PUSCH.

Based on this possible implementation, when power control of an antenna panel is unrelated to an MCS used for PUSCH transmission, power control complexity can be reduced.

With reference to the third aspect, in an implementation of the third aspect, the transmitting information on each antenna panel based on the power for transmitting information on each antenna panel includes: transmitting a second PUSCH on the one antenna panel based on the first power, and transmitting a third PUSCH on the other antenna panel based on the second power.

With reference to the third aspect, in an implementation of the third aspect, the first power is evenly allocated to L1 layers of the second PUSCH, and the second power is evenly allocated to L2 layers of the third PUSCH.

With reference to the third aspect, in an implementation of the third aspect, when a number L1 of layers of the second PUSCH is greater than a second threshold, the power control parameter set of the one antenna panel does not include an MCS used to transmit the second PUSCH, or power control of the one antenna panel is unrelated to the MCS used to transmit the second PUSCH. Based on this possible implementation, when power control of an antenna panel is unrelated to an MCS used for PUSCH transmission, power control complexity can be reduced.

With reference to the third aspect, in an implementation of the third aspect, a first parameter corresponding to the one antenna panel is a first sounding reference signal resource indicator SRI, and a first parameter corresponding to the other antenna panel is a second SRI; and the determining, based on the first parameter corresponding to each of the plurality of antenna panels, a power control parameter set corresponding to each of the plurality of antenna panels includes: determining, based on a PUSCH power control parameter set corresponding to the first SRI, the power control parameter set corresponding to the one antenna panel, and determining, based on a PUSCH power control parameter set corresponding to the second SRI, the power control parameter set corresponding to the other antenna panel.

With reference to the third aspect, in an implementation of the third aspect, the obtaining a first parameter corresponding to each of a plurality of antenna panels includes: sending a first SRS by using the one antenna panel, to obtain the first SRI corresponding to the first SRS; and sending a second SRS by using the other antenna panel, to obtain the second SRI corresponding to the second SRS.

With reference to the third aspect, in an implementation of the third aspect, the transmitting information on each antenna panel based on the power for transmitting information on each antenna panel includes: transmitting a third SRS on the one antenna panel based on the first power, and transmitting a fourth SRS on the other antenna panel based on the second power.

With reference to the third aspect, in an implementation of the third aspect, the power control parameter set corresponding to the one antenna panel is a power control parameter set corresponding to a resource of the third SRS, and the power control parameter set corresponding to the other antenna panel is a power control parameter set corresponding to a resource of the fourth SRS.

With reference to the third aspect, in an implementation of the third aspect, the obtaining a first parameter corresponding to each of a plurality of antenna panels includes: receiving configuration information from a network device, where the configuration information is used to configure at least one SRS resource set, the SRS resource set includes at least one SRS resource, each SRS resource in the SRS resource set corresponds to one power control parameter set, and the resource of the third SRS and the resource of the fourth SRS are SRS resources in the at least one SRS set.

Based on this possible implementation, in this application, a corresponding power control parameter is configured for each SRS resource, so that power for SRS transmission on different antenna panels can be independently calculated, that is, each antenna panel can perform independent power control, making power control more accurate, thereby improving channel detection accuracy and improving information transmission efficiency.

According to a fourth aspect, a communication method is provided. The method may be performed by a network device, or may be performed by a component of the network device, such as a processor, a chip, or a chip system of the network device, or may be implemented by a logical module or software that can implement all or some functions of the network device. The method includes: generating first information and sending the first information to a terminal device, where the first information is used to determine N antenna panels, the N antenna panels are used to transmit second information, and N is a positive integer greater than or equal to 1.

With reference to the fourth aspect, in an implementation of the fourth aspect, that the first information is used to determine N antenna panels includes: The first information includes a plurality of identifiers, each of the plurality of identifiers indicates whether one of a plurality of antenna panels is available, and the plurality of antenna panels include at least the N antenna panels.

With reference to the fourth aspect, in an implementation of the fourth aspect, each of the plurality of identifiers is used for physical uplink shared channel PUSCH transmission.

With reference to the fourth aspect, in an implementation of the fourth aspect, the identifier is a modulation and coding scheme MCS field or a transmission precoding matrix indicator TPMI field.

With reference to the fourth aspect, in an implementation of the fourth aspect, that each of the plurality of identifiers indicates whether one of a plurality of antenna panels is available includes: When an identifier value associated with an antenna panel i belongs to a first value set, the antenna panel i is available; or when the identifier value associated with the antenna panel i belongs to a second value set, the antenna panel i is unavailable. The antenna panel i is one of the plurality of antenna panels, the first value set is a set associated with the antenna panel i, and the second value set is a set associated with the antenna panel i, where i is a natural number.

With reference to the fourth aspect, in an implementation of the fourth aspect, that the first information is used to determine N antenna panels includes: The first information includes one identifier, the one identifier indicates whether a plurality of antenna panels are available, and the plurality of antenna panels include at least the N antenna panels.

With reference to the fourth aspect, in an implementation of the fourth aspect, that the first information is used to determine N antenna panels includes: The first information indicates the N antenna panels.

With reference to the fourth aspect, in an implementation of the fourth aspect, that the first information is used to determine N antenna panels includes: The N antenna panels are N of K antenna panels, and the first information indicates K-N unavailable antenna panels in the K antenna panels, where K is a positive integer greater than or equal to N.

According to a fifth aspect, a communication method is provided. The method may be performed by a network device, or may be performed by a component of the network device, such as a processor, a chip, or a chip system of the network device, or may be implemented by a logical module or software that can implement all or some functions of the network device. The method includes: obtaining a first parameter corresponding to each of a plurality of antenna panels; and sending the first parameter corresponding to each of the plurality of antenna panels to a terminal device, where the first parameter corresponding to each antenna panel is used to determine a power control parameter set corresponding to each antenna panel, and the power control parameter set corresponding to each antenna panel is used to determine power for transmitting information on each antenna panel.

Based on this solution, the network device sends the first parameter corresponding to each antenna panel to the terminal device, and therefore the terminal device may determine, based on the first parameter, the power control parameter set corresponding to each of the plurality of antenna panels, and determine the power that is for transmitting information and that corresponds to each of the plurality of antenna panels, so that power for transmitting information on different antenna panels can be independently calculated, that is, each antenna panel can perform independent power control, making power control more accurate, thereby improving information transmission efficiency.

With reference to the fifth aspect, in an implementation of the fifth aspect, the plurality of antenna panels are two antenna panels, a first parameter corresponding to one antenna panel in the two antenna panels is a first sounding reference signal resource indicator SRI, and a first parameter corresponding to the other antenna panel in the two antenna panels is a second SRI.

With reference to the fifth aspect, in an implementation of the fifth aspect, the obtaining a first parameter corresponding to each of a plurality of antenna panels includes: receiving a first sounding reference signal SRS sent by the terminal device by using the one antenna panel, and determining the first SRI corresponding to the first SRS; and receiving a second SRS sent by the terminal device by using the other antenna panel, and determining the second SRI corresponding to the second SRS.

With reference to the fifth aspect, in an implementation of the fifth aspect, the plurality of antenna panels are two antenna panels, one antenna panel in the two antenna panels is used to transmit a third SRS, and the other antenna panel in the two antenna panels is used to transmit a fourth SRS; and a first parameter corresponding to the one antenna panel is a resource of the third SRS, and a first parameter corresponding to the other antenna panel is a resource of the fourth SRS.

With reference to the fifth aspect, in an implementation of the fifth aspect, the sending the first parameter corresponding to each of the plurality of antenna panels to a terminal device includes: sending configuration information to the terminal device, where the configuration information is used to configure at least one SRS resource set, the SRS resource set includes at least one SRS resource, each SRS resource in the SRS resource set corresponds to one power control parameter set, and the resource of the third SRS and the resource of the fourth SRS are SRS resources in the at least one SRS set.

According to a sixth aspect, a communication apparatus configured to implement the foregoing methods is provided. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip. The communication apparatus includes corresponding modules, units, or means (means) for implementing the foregoing methods. The modules, units, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in any one of the foregoing aspects and any one of the possible implementations thereof. The transceiver module may include a transceiver circuit, a transceiver machine, a transceiver, or a communication interface. The processing module may be configured to implement a processing function in any one of the foregoing aspects and any one of the possible implementations thereof.

In some possible designs, the transceiver module includes a sending module and a receiving module, respectively configured to implement the sending function and the receiving function in any one of the foregoing aspects and any one of the possible implementations thereof.

According to a seventh aspect, a communication apparatus is provided, including a processor and a memory. The memory is configured to store computer instructions. When the processor executes the instructions, the communication apparatus is enabled to perform the method according to any one of the foregoing aspects. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip.

According to an eighth aspect, a communication apparatus is provided, including a processor and a communication interface. The communication interface is configured to communicate with a module outside the communication apparatus. The processor is configured to execute a computer program or instructions, so that the communication apparatus performs the method according to any one of the foregoing aspects. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip.

According to a ninth aspect, a communication apparatus is provided, including a logic circuit and an interface circuit. The interface circuit is configured to input and/or output information. The logic circuit is configured to perform the method according to any one of the foregoing aspects, to perform processing based on input information and/or generate output information. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip.

According to a tenth aspect, a communication apparatus is provided, including an interface circuit and a processor. The interface circuit is a code/data read/write interface circuit, and the interface circuit is configured to receive computer-executable instructions (the computer-executable instructions are stored in a memory, and may be directly read from the memory, or may be read through another component) and transmit the computer-executable instructions to the processor. The processor is configured to execute the computer-executable instructions, so that the communication apparatus performs the method according to any one of the foregoing aspects. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip.

According to an eleventh aspect, a communication apparatus is provided, including at least one processor. The processor is configured to execute a computer program or instructions, so that the communication apparatus performs the method according to any one of the foregoing aspects. The communication apparatus may be the terminal device in the first aspect to the third aspect, or an apparatus included in the terminal device, for example, a chip; or the communication apparatus may be the network device in the fourth aspect or the fifth aspect, or an apparatus included in the network device, for example, a chip.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is the chip system, the apparatus may include a chip, or may include a chip and another discrete component.

According to a twelfth aspect, a computer-readable storage medium is provided. The computer-readable storage medium stores instructions, and when the instructions are run on a communication apparatus, the communication apparatus is enabled to perform the method according to any one of the foregoing aspects.

According to a thirteenth aspect, a computer program product including instructions is provided. When the computer program product runs on a communication apparatus, the communication apparatus is enabled to perform the method according to any one of the foregoing aspects.

It may be understood that, when the communication apparatus provided in any one of the sixth aspect to the thirteenth aspect is the chip, the foregoing sending action/function may be understood as information output, and the foregoing receiving action/function may be understood as information input.

For technical effects brought by any design manner of the sixth aspect to the thirteenth aspect, refer to the technical effects brought by different design manners in the first aspect, the second aspect, the third aspect, the fourth aspect, or the fifth aspect. Details are not described herein again.

According to a fourteenth aspect, a communication system is provided. The communication system includes a network device, the terminal device according to the first aspect, and the network device according to the fourth aspect.

According to a fifteenth aspect, a communication system is provided. The communication system includes a network device and the terminal device according to the second aspect.

According to a sixteenth aspect, a communication system is provided. The communication system includes a network device, the terminal device according to the third aspect, and the network device according to the fifth aspect.

## BRIEF DESCRIPTION OF DRAWINGS

FIG. 1a is a schematic flowchart of uplink data processing according to this application;
FIG. 1b is a diagram 1 of codeword mapping according to this application;

FIG. 2 is a diagram 2 of codeword mapping according to this application;

FIG. 3 is a diagram of a structure of a communication system according to this application;

FIG. 4 is a diagram of a structure of another communication system according to this application;

FIG. 5 is a diagram of structures of a terminal device and a network device according to this application;

FIG. 6 is a schematic flowchart of a communication method according to this application;

FIG. 7 is a schematic interaction flowchart of a communication method according to this application;

FIG. 8 is a schematic interaction flowchart of another communication method according to this application;

FIG. 9 is a schematic flowchart of another communication method according to this application;

FIG. 10 is a diagram 3 of codeword mapping according to this application;

FIG. 11 is a diagram 4 of codeword mapping according to this application;

FIG. 12 is a diagram 5 of codeword mapping according to this application;

FIG. 13a is a diagram 6 of codeword mapping according to this application;

FIG. 13b is a diagram 7 of codeword mapping according to this application;

FIG. 14 is a schematic flowchart of still another communication method according to this application;

FIG. 15 is a diagram 8 of codeword mapping according to this application;

FIG. 16 is a diagram of sending an SRS according to this application;

FIG. 17 is another diagram of sending an SRS according to this application;

FIG. 18 is still another diagram of sending an SRS according to this application;

FIG. 19 is a diagram of transmitting information of different types by using a plurality of antenna panels according to this application;

FIG. 20 is a diagram of a structure of a terminal device according to this application;

FIG. 21 is a diagram of a structure of a network device according to this application; and

FIG. 22 is a diagram of a structure of a communication apparatus according to this application.

## DESCRIPTION OF EMBODIMENTS

In the descriptions of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural.

In the descriptions of this application, unless otherwise specified, "a plurality of" means two or more. In addition, "at least one of the following items (pieces)" or a similar expression thereof means any combination of these items, including any combination of singular items (pieces) or plural items (pieces). For example, at least one of a, b, or c may represent: a, b, c, a and b, a and c, b and c, and a and b and c, where a, b, and c may be singular or plural.

In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference.

In embodiments of this application, a word such as "example" or "for example" is used to indicate an example, an instance, or descriptions. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner for ease of understanding.

It may be understood that "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve corresponding effects; or in some scenarios, the optional features may be combined with other features based on a requirement. Correspondingly, apparatuses provided in embodiments of this application may also correspondingly implement these features or functions. Details are not described herein.

In this application, unless otherwise specified, for same or similar parts in embodiments, reference may be made to each other. In embodiments of this application, unless otherwise specified or a logical conflict occurs, terms and/or descriptions in different embodiments are consistent and may be referenced by each other. Technical features in different embodiments may be combined to form new embodiments, implementations, implementation methods, or implementation means based on internal logical relationships. The following implementations of this application are not intended to limit the protection scope of this application.

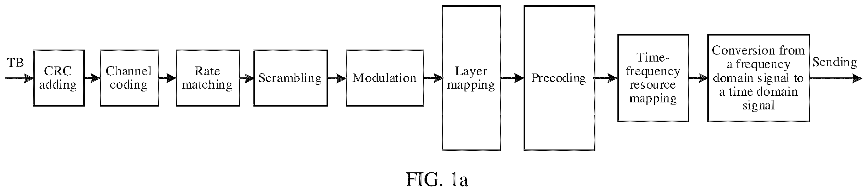

For ease of understanding of the technical solutions in embodiments of this application, an uplink data processing process is first briefly described below. For example, FIG. 1a is a schematic flowchart of uplink data processing.

As shown in FIG. 1a, a terminal device adds a cyclic redundancy check (cyclic redundancy check, CRC) bit to a transport block (transport block, TB), performs channel coding (turbo coder), rate matching, scrambling (scrambling), modulation (modulation), layer mapping (layer mapping), precoding (precoding), and time-frequency resource mapping, and converts a signal obtained after time-frequency resource mapping into a time-domain signal for sending. The TB may also be referred to as physical uplink shared channel (physical uplink shared channel, PUSCH) data.

A TB that includes a CRC bit and on which channel coding and rate matching are performed may be understood as a codeword (codeword). The codeword is further scrambled and modulated to obtain a modulation symbol. After layer mapping is performed on the modulation symbol, the modulation symbol is mapped to one or more transport layers (transport layer, which is also generally referred to as a layer). Each layer corresponds to one valid data flow. A data flow at each layer is precoded to obtain a precoded data flow. Precoding is a process of mapping a layer (layer) to an antenna port (antenna port) by using a precoding matrix. The precoded data flow is mapped to a time-frequency resource, and then is converted into a time-domain signal for sending.

In addition, in a current 3rd generation partnership project (3rd generation partnership project, 3GPP) NR system, physical uplink shared channel (physical uplink shared channel, PUSCH) transmission supports mapping of one codeword (codeword) to a maximum of four layers. For example, a codeword-to-layer (codeword-to-layer) mapping relationship may be shown in Table 1:

**Table 1**

| Number of layers (number of layers) | Number of codewords (number of layers) | Codeword-to-layer mapping $i = 0, 1, \ldots M_{symb}^{layer} - 1$ |
|---|---|---|
| 1 | 1 | $x^{(0)}(i) = d^{(0)}(i)$    $M_{symb}^{layer} = M_{symb}^{(0)}$ |
| 2 | 1 | $x^{(0)}(i) = d^{(0)}(2i)$ <br> $x^{(1)}(i) = d^{(0)}(2i+1)$    $M_{symb}^{layer} = M_{symb}^{(0)} / 2$ |
| 3 | 1 | $x^{(0)}(i) = d^{(0)}(3i)$ <br> $x^{(1)}(i) = d^{(0)}(3i+1)$    $M_{symb}^{layer} = M_{symb}^{(0)} / 3$ <br> $x^{(2)}(i) = d^{(0)}(3i+2)$ |
| 4 | 1 | $x^{(0)}(i) = d^{(0)}(4i)$ <br> $x^{(1)}(i) = d^{(0)}(4i+1)$ <br> $x^{(2)}(i) = d^{(0)}(4i+2)$    $M_{symb}^{layer} = M_{symb}^{(0)} / 4$ <br> $x^{(3)}(i) = d^{(0)}(4i+3)$ |

$x^{(0)}$ indicates a 0th layer, and $x^{(1)}$ indicates a 1st layer. By analogy, $x^{(3)}$ indicates a 3rd layer. $d^{(0)}$ indicates a 0th codeword. $M_{symb}^{layer}$ indicates a number of symbols at each layer, and $M_{symb}^{(0)}$ indicates a number of symbols of a codeword 0. $x^{(0)}(i) = d^{(0)}(i)$ indicates that an ith symbol of the codeword 0 is mapped to an ith symbol of the 0th layer. $x^{(0)}(i) = d^{(0)}(2i)$ indicates that a (2i)th symbol of the codeword 0 is mapped to the ith symbol of the 0th layer, $x^{(1)}(i) = d^{(0)}(2i + 1)$ indicates that a (2i+1)th symbol of the codeword 0 is mapped to an ith symbol of the 1st layer, and so on.

After layer mapping, the terminal may perform PUSCH power control. For example, transmit power of a PUSCH satisfies Formula (1):

$$P_{PUSCH,b,f,c}(i,j,q_d,l)=$$
$$\min\left\{\begin{array}{l}P_{CMAX,f,c}(i)\\P_{O\_PUSCH,b,f,c}(j)+10\log_{10}\left(2^{\mu}\cdot M_{RB,b,f,c}^{PUSCH}(i)\right)+\alpha_{b,f,c}(j)\cdot PL_{b,f,c}(q_d)+\Delta_{TF,b,f,c}(i)+f_{b,f,c}(i,l)\end{array}\right\} \quad (1)$$

$P_{PUSCH,b,f,c}(i, j, q_d, l)$ is the transmit power of the PUSCH.

$P_{CMAX,f,c}(i)$ is allowed maximum transmit power of the PUSCH.

$P_{O\_PUSCH,b,f,c}(j)$ is receive power expected by a network device, and may be configured by the network device.

$M_{RB,b,f,c}^{PUSCH}(i)$ is a number of resource blocks resource block, RB) for PUSCH transmission.

$\mu$ indicates a subcarrier spacing for PUSCH transmission.

$\alpha_{b,f,c}(j)$ is a partial path loss compensation parameter that can be configured on a network.

$PL_{b,f,c}(q_d)$ is uplink path loss estimation.

$\Delta_{TF,b,f,c}(i)$ is related to a modulation and coding scheme (modulation and coding scheme, MCS) used for the PUSCH. When a number of layers of the PUSCH is greater than 1, $\Delta_{TF,b,f,c}(i) = 0$.

$f_{b,f,c}(i,l)$ is a closed-loop power control parameter.

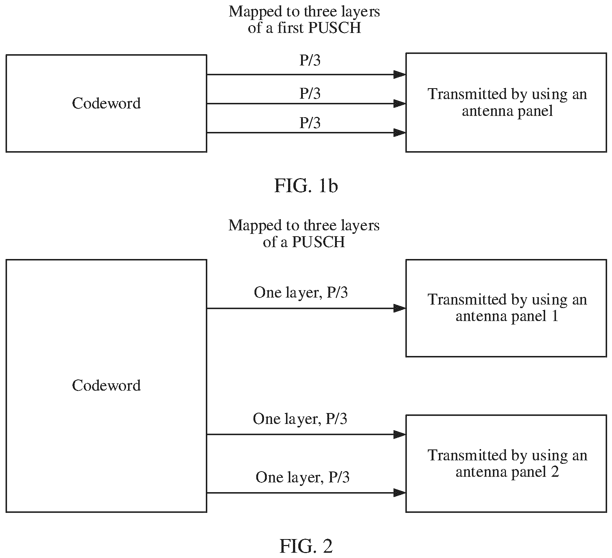

Generally, the transmit power of the PUSCH is evenly allocated to the layers of the PUSCH. For example, as shown in FIG. 1b, if one codeword is mapped to three layers of a PUSCH for transmission, transmit power P of the PUSCH is evenly allocated to the three layers of the PUSCH, that is, transmit power at each layer is P/3.

Power control formulas of a physical uplink control channel (physical uplink control channel, PUCCH), a sounding reference signal (sounding reference signal, SRS), and a physical random access channel (physical random access channel, PRACH) are similar to power control of the PUSCH. For details, refer to descriptions in an existing protocol. Details are not described herein again.

When the transmit power of the PUSCH is evenly allocated to the layers of the PUSCH, and the terminal is provided with a plurality of antenna panels, power for transmitting information on the antenna panels is linearly related to a number of layers of the PUSCH transmitted on the antenna panels. For example, as shown in FIG. 2, it is assumed that the terminal device is provided with an antenna panel 1 and an antenna panel 2, the antenna panel 1 supports transmission of one layer of data of a PUSCH, and the antenna panel 2 supports transmission of two layers of data of the PUSCH. During PUSCH transmission, if one codeword is mapped to three layers of the PUSCH, the antenna panel 1 is used for transmission at one layer of the PUSCH, and the antenna panel 2 is used for transmission at the other two layers of the PUSCH. Correspondingly, assuming that the transmit power of the PUSCH that is determined according to Formula (1) is P, power for transmitting the one layer of data of the PUSCH on the antenna panel 1 is P/3, and power for transmitting the two layers of data of the PUSCH on the antenna panel 2 is 2P/3.

However, different antenna panels may correspond to different path losses, and a path loss corresponding to an antenna panel should be considered for power for transmitting information on the antenna panel. If power for transmitting information on an antenna panel is determined according to an existing protocol, actual transmit power (that is, transmit power allocated based on a number of layers of a transmitted PUSCH) does not match ideal transmit power (that is, transmit power with a path loss difference is considered), which is also referred to as "panel power imbalance".

In addition, in the existing protocol, only one codeword can be mapped to at least one layer of a PUSCH and transmitted by using at least one antenna panel. Because different antenna panels pass through different channels, when a plurality of antenna panels are used for transmission at at least one layer of the PUSCH, different antenna panels have different requirements for an MCS. However, one codeword corresponds to only one MCS, and the MCS of the codeword may be different from an MCS required by the plurality of antenna panels, that is, "panel MCS imbalance" occurs.

In addition, in a multi-antenna-panel scenario, an antenna panel used for transmission may be determined in a beam management process performed by the terminal device and the network device. However, there is a time interval between the beam management process and actual transmission, and channel quality corresponding to an antenna panel selected in the beam management process may be poor during actual transmission. Therefore, how to select an antenna panel used for transmission from a plurality of antenna panels during actual transmission is also an urgent problem to be resolved in the multi-antenna-panel scenario.

Based on this, this application discusses antenna panel selection, power control, and codeword mapping in the multi-antenna-panel scenario.

In a possible implementation, an antenna panel in this application may be a group of antenna sets. Therefore, "antenna panel" in this application may also be replaced with "antenna set". Optionally, the group of antenna sets may be antenna sets that can independently (or separately) control transmit power. Alternatively, the group of antenna sets may be antenna sets that can independently (or separately) perform timing. Alternatively, the group of antenna sets may be antenna sets that can independently (or separately) perform modulation and coding.

In another possible implementation, an antenna panel in this application may be a capability value set in a capability value set list of the terminal device. Therefore, "antenna panel" in this application may also be replaced with "capability set". Optionally, the capability value set may include, for example, a number of SRS ports, a maximum number of SRS ports, a number of layers for uplink (uplink, UL) sending, a maximum number of layers for UL sending, and a coherence type of an antenna port.

Optionally, there is a correspondence between a capability value set and a synchronization signal and physical broadcast channel block (synchronization signal and physical broadcast channel block, SSB) resource indicator (SSB resource indicator, SSBRI) or a correspondence between a capability value set and a channel state information reference signal (channel state information reference signal, CSI-RS) resource indicator (CRI-RS resource indicator, CRI). Therefore, one antenna panel may also be one SSBRI or CRI. In addition, "antenna panel" in this application may also be replaced with "SSBRI" or "CRI".

Optionally, the correspondence between a capability value set and an SSBRI or the correspondence between a capability value set and a CRI may be determined by the terminal device. The terminal device may report the correspondence between a capability value set and an SSBRI or the correspondence between a capability value set and a CRI to the network device during beam reporting. Alternatively, the terminal device may report a capability value set, an SSBRI, or a CRI to the network device.

In still another possible implementation, an antenna panel in this application may be an SRS set. Therefore, "antenna panel" in this application may also be replaced with "SRS set".

Optionally, in this application, a definition of one antenna panel may dynamically change. For example, at a moment 1, one antenna panel is a capability set including four SRS ports. At a moment 2 after the moment 1, the antenna panel may be a capability set including two SRS ports.

The technical solutions in embodiments of this application may be applied to various communication systems. The communication system may be a 3GPP communication system, for example, a long term evolution (long term evolution, LTE) system, a 5th generation (5th generation, 5G) mobile communication system, an NR system, a vehicle to everything (vehicle to everything, V2X) system, an LTE and 5G hybrid networking system, a device-to-device (device-to-device, D2D) communication system, a machine-to-machine (machine-to-machine, M2M) communication system, the internet of things (Internet of Things, IoT), or another next-generation communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communications (ultra-reliable low latency communications, URLLC), machine type communication (machine type communication, MTC), massive machine type communication (massive machine type communication, mMTC), D2D, V2X, IoT, multi-hop or relay (relay) transmission between a network device and a terminal device, and dual connectivity (dual connectivity, DC) or multi connectivity between a plurality of network devices and terminal devices.

The communication systems and the communication scenarios applicable to this application are merely examples for description. The communication systems and the communication scenarios applicable to this application are not limited thereto. This is uniformly described herein. Details are not described below again.

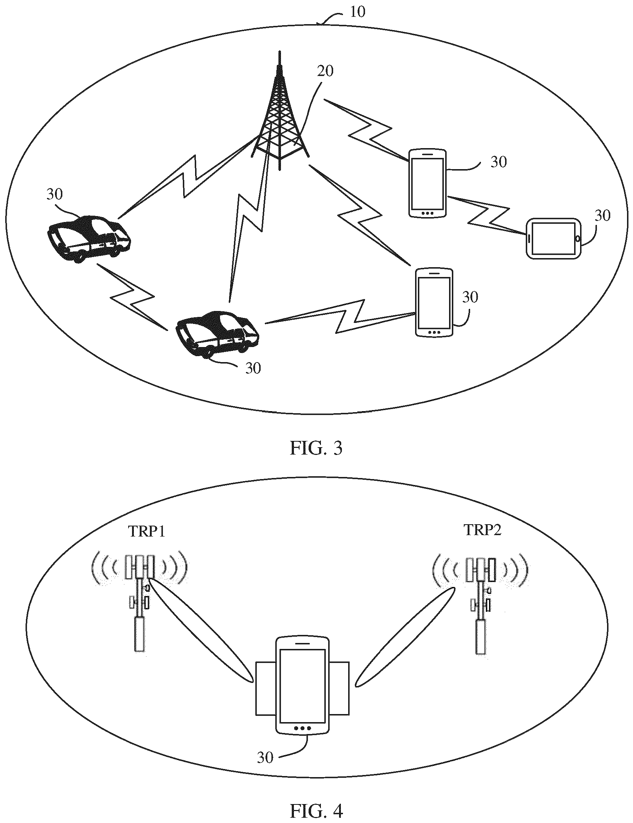

FIG. 3 shows a communication system 10 according to an embodiment of this application. The communication system 10 includes at least one network device 20 and one or more terminal devices 30 connected to the network device 20. Optionally, different terminal devices 30 may communicate with each other.

Optionally, the terminal device 30 in this application may be a device having a wireless transceiver function. The terminal device may be deployed on land, and includes an indoor or outdoor device, a handheld device, or a vehicle-mounted device; or may be deployed on water (for example, on a ship); or may be deployed in the air (for example, on an aircraft, a balloon, or a satellite). The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a wireless terminal in IoT, V2X, D2D, M2M, a 5G network, or a future evolved public land mobile network (public land mobile network, PLMN).

For example, the terminal device 30 may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

Optionally, the network device 20 in this application is a device for connecting the terminal device 30 to a wireless network; and may be an evolved NodeB (evolved NodeB, eNB or eNodeB) in an LTE or evolved LTE system (LTE-Advanced, LTE-A), for example, a conventional macro base station eNB or a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a broadband network gateway (broadband network gateway, BNG), an aggregation switch, or a non-3GPP access device; or may be a radio controller in a cloud radio access network (cloud radio access network, CRAN); or may be an access node (access point, AP) in a Wi-Fi system; or may be a radio relay node or a radio backhaul node; or may be a device implementing a base station function in IoT, a device implementing a base station function in V2X, a device implementing a base station function in D2D, or a device implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

In some embodiments, the terminal device 30 may be provided with a plurality of antenna panels, and each antenna panel covers one spatial direction. Spatial directions covered by different antenna panels may be the same or may be different. Different antenna panels may point to a same TRP or different TRPs. For example, as shown in FIG. 4, the terminal device 30 is provided with two antenna panels, respectively pointing to a TRP 1 and a TRP 2.

In some embodiments, the network device 20 and the terminal device 30 may also be referred to as communication apparatuses, and each may be a general-purpose device or a special-purpose device. This is not specifically limited in embodiments of this application.

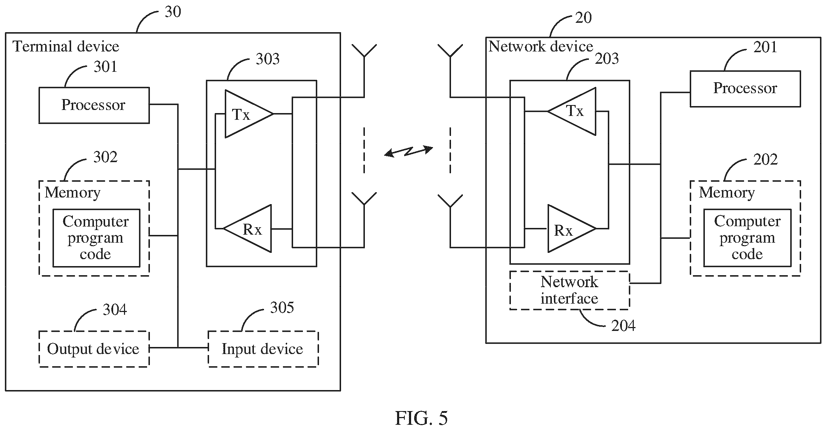

FIG. 5 is a diagram of structures of the network device 20 and the terminal device 30 according to an embodiment of this application. The terminal device 30 includes at least one processor (an example in which the terminal device 30 includes one processor 301 is used for description in FIG. 5) and at least one transceiver (an example in which the terminal device 30 includes one transceiver 303 is used for description in FIG. 5). The terminal device 30 may further include at least one memory (an example in which the terminal device 30 includes one memory 302 is used for description in FIG. 5), at least one output device (an example in which the terminal device 30 includes one output device 304 is used for description in FIG. 5), and at least one input device (an example in which the terminal device 30 includes one input device 305 is used for description in FIG. 5).

The processor 301, the memory 302, and the transceiver 303 are connected through a communication line. The communication line may include a path for exchanging information between the foregoing components.

The processor 301 may be a general-purpose central processing unit (central processing unit, CPU), a special-purpose processor, a microprocessor, an application-specific integrated circuit (application-specific integrated circuit, ASIC), or one or more integrated circuits configured to control program execution of the solutions in this application. For example, the processor 301 may be a baseband processor or a central processing unit. The baseband processor may be configured to process a communication protocol and communication data. The central processing unit may be configured to: control a communication apparatus (for example, a network device, a terminal device, or a chip of the terminal device or the network device), execute a software program, and process data of the software program. During specific implementation, in an embodiment, the processor 301 may alternatively include a plurality of CPUs, and the processor 301 may be a single-core (single-CPU) processor or a multi-core (multi-CPU) processor. The processor herein may be one or more devices, circuits, or processing cores configured to process data (for example, computer program instructions).

The memory 302 may be an apparatus having a storage function. For example, the memory 302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory 302 may exist independently, and is connected to the processor 301 through the communication line. Alternatively, the memory 302 may be integrated with the processor 301.

The memory 302 is configured to store computer-executable instructions for executing the solutions of this application, and the processor 301 controls the execution. Specifically, the processor 301 is configured to execute the computer-executable instructions stored in the memory 302, to implement a method in an embodiment of this application.

Alternatively, in this application, the processor 301 may perform a processing-related function in the method provided in this application, and the transceiver 303 is responsible for communicating with another device or a communication network. This is not specifically limited in embodiments of this application.

The computer-executable instructions in this application may also be referred to as application program code or computer program code. This is not specifically limited in embodiments of this application.

The transceiver 303 may use any transceiver-type apparatus, and is configured to communicate with another device or a communication network such as the Ethernet, a radio access network (radio access network, RAN), or a wireless local area network (wireless local area network, WLAN). The transceiver 303 includes a transmitter (transmitter, Tx) and a receiver (receiver, Rx).

The output device 304 communicates with the processor 301, and may display information in a plurality of manners. For example, the output device 304 may be a liquid crystal display (liquid crystal display, LCD), a light emitting diode (light emitting diode, LED) display device, a cathode ray tube (cathode ray tube, CRT) display device, or a projector (projector).

The input device 305 communicates with the processor 301, and may receive an input of a user in a plurality of manners. For example, the input device 305 may be a mouse, a keyboard, a touchscreen device, or a sensing device.

The network device 20 includes at least one processor (an example in which the network device 20 includes one processor 201 is used for description in FIG. 5) and at least one transceiver (an example in which the network device 20 includes one transceiver 203 is used for description in FIG. 5). The network device 20 may further include at least one memory (an example in which the network device 20 includes one memory 202 is used for description in FIG. 5) and at least one network interface (an example in which the network device 20 includes one network interface 204 is used for description in FIG. 5). The processor 201, the memory 202, the transceiver 203, and the network interface 204 are connected through the communication line. The network interface 204 is configured to connect to a core network device through a link (for example, an S1 interface), or connect to a network interface of another network device through a wired or wireless link (for example, an X2 interface) (not shown in FIG. 5). This is not specifically limited in embodiments of this application. In addition, for related descriptions of the processor 201, the memory 202, and the transceiver 203, refer to the descriptions of the processor 301, the memory 302, and the transceiver 303 in the terminal device 30. Details are not described herein again.

It may be understood that the structures shown in FIG. 5 do not constitute a specific limitation on the terminal device 30 and the network device 20. For example, in some other embodiments of this application, the terminal device 30 and the network device 20 each may include more or fewer components than those shown in the figure, or combine some components, or split some components, or use different component arrangements. The components shown in the figure may be implemented by using hardware, software, or a combination of software and hardware.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the accompanying drawings, the following describes methods provided in embodiments of this application. It may be understood that, in embodiments of this application, the terminal device may perform some or all of steps in embodiments of this application, and these steps or operations are merely examples. The terminal device may further perform another operation or various operation variants. In addition, the steps may be performed in a sequence different from a sequence presented in embodiments of this application, and not all operations in embodiments of this application need to be performed.

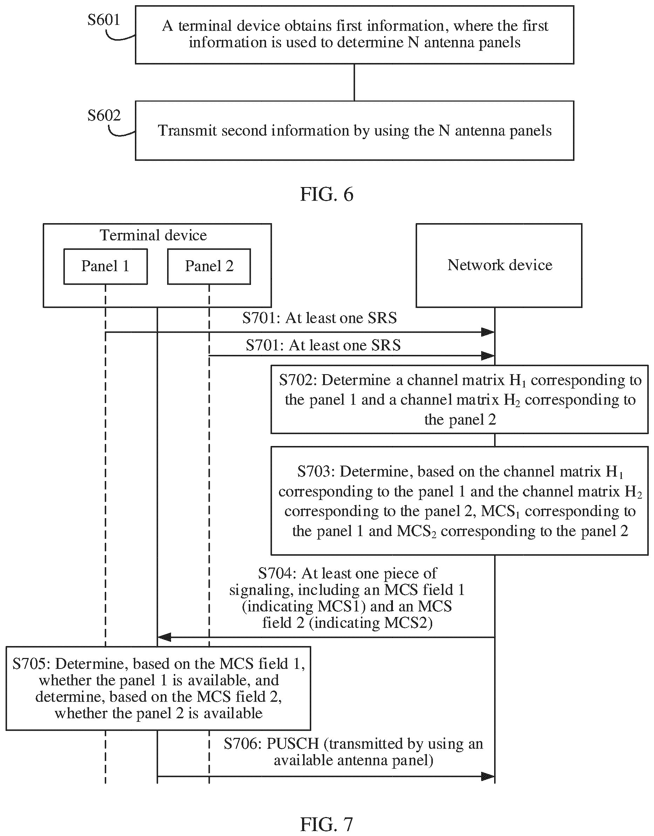

FIG. 6 shows a communication method according to this application. The communication method may be used to select an antenna panel in a multi-antenna-panel scenario. With reference to FIG. 6, the method includes the following steps.

S601: A terminal device obtains first information.

The first information is used to determine N antenna panels, the N antenna panels are used to transmit second information, and N is a positive integer greater than or equal to 1

The N antenna panels are antenna panels of a same terminal device. In some embodiments, a total number of antenna panels of the terminal device is K, and K is a positive integer greater than or equal to N. In other words, the first information is used to determine the N antenna panels in the K antenna panels. Optionally, a value of K may be 2, 3, or 4. In other words, in this application, the number of antenna panels of the terminal device may be 2, 3, or 4.

Optionally, the first information may be predefined, or may be generated by a network device and sent to the terminal device. If the first information is predefined, that a terminal device obtains first information may include: The terminal device reads the predefined first information. If the first information is sent by the network device, that a terminal device obtains first information may include: The terminal device receives the first information from the network device.

S602: The terminal device transmits the second information by using the N antenna panels.

Optionally, the second information may be one or more of a codebook (codebook, CB)-based PUSCH, a non-codebook (Non-codebook, NCB)-based PUSCH, a PUCCH, an SRS, and a PRACH.

Based on this solution, the terminal device may determine, by using the first information, one or more antenna panels for information transmission, and perform information transmission by using the one or more antenna panels, to implement antenna panel selection. This can prevent information transmission from being performed by using an antenna panel with poor channel quality, thereby improving information transmission efficiency. In addition, switching between transmission by using some antenna panels of the terminal device and transmission by using all antenna panels of the terminal device may be implemented through antenna panel selection.

The foregoing describes an overall procedure of the communication method provided in this application. The following describes in detail the first information in the foregoing procedure. For example, the first information may be implemented in the following four manners:

Manner 1: That the first information is used to determine N antenna panels includes: The first information includes a plurality of identifiers, and each of the plurality of identifiers indicates whether one of a plurality of antenna panels is available, where the plurality of antenna panels include at least the N antenna panels in the procedure shown in FIG. 6.

Optionally, the plurality of antenna panels may be all antenna panels of the terminal device. For example, if the total number of antenna panels of the terminal device is K, the plurality of antenna panels are the K antenna panels. Alternatively, the plurality of antenna panels may be some antenna panels of the terminal device. For example, if the total number of antenna panels of the terminal device is K, the plurality of antenna panels may be M of the K antenna panels of the terminal device, where $N \leq M \leq K$.

Optionally, a number of the plurality of identifiers may be the same as a number of the plurality of antenna panels. For example, the plurality of identifiers may be in one-to-one correspondence with the plurality of antenna panels, and an identifier indicates whether an antenna panel associated with the identifier is available. For example, the plurality of antenna panels are all antenna panels of the terminal device. A $k^{th}$ identifier may indicate whether a $k^{th}$ antenna panel is available, where $k = 0,1,...,K$-1.

Alternatively, a number of the plurality of identifiers may be different from a number of the plurality of antenna panels. For example, the number of identifiers may be less than the number of antenna panels. For example, if the number of antenna panels is K, the number of identifiers may be K/X, where X is a positive integer greater than 1. In this case, one identifier may correspond to X antenna panels, and indicate whether the X antenna panels are available.

In a possible implementation, when the second information is a PUSCH, the plurality of antenna panels may be associated with a same PUSCH, and each of the plurality of antenna panels can be used for transmission at at least one layer of the same PUSCH. In this case, when the N antenna panels are determined in the plurality of antenna panels, each of the N antenna panels is used for transmission at the at least one layer of the same PUSCH. In other words, one PUSCH is transmitted by using the N antenna panels, and each antenna panel is used for transmission at different layers of the PUSCH. For example, the number of the plurality of antenna panels is equal to 3. The three antenna panels may be associated with a same PUSCH, and each antenna panel may be used for transmission at at least one layer of the same PUSCH. If N is equal to 2, each of the two of the three antenna panels can be used for transmission at the at least one layer of the PUSCH. For example, a panel is used for transmission at n1 layers of the PUSCH, and a panel 2 is used for transmission at n2 layers of the PUSCH.

Alternatively, each of the plurality of antenna panels is associated with one PUSCH, and different antenna panels are associated with different PUSCHs. In this case, when the N antenna panels are determined in the plurality of antenna panels, each of the N antenna panels is used to transmit one PUSCH, and different antenna panels are used to transmit different PUSCHs. For example, if the number of the plurality of antenna panels is equal to 3, the three antenna panels may be associated with different PUSCHs. If N is equal to 2, the two of the three antenna panels may be used to transmit different PUSCHs. For example, a panel 1 may be used to transmit a PUSCH #1, and a panel 2 may be used to transmit a PUSCH #2.

Optionally, when each of the plurality of antenna panels is associated with one PUSCH, the network device may schedule, by using a plurality of pieces of downlink control information (downlink control information, DCI), PUSCHs associated with the plurality of antenna panels. When the plurality of panels are associated with one PUSCH, the network device may schedule, by using one piece of DCI, the one PUSCH to be transmitted on the plurality of antenna panels.

Optionally, when the first information is sent by the network device, if the plurality of antenna panels may be associated with a same PUSCH, the plurality of identifiers included in the first information may be carried in same first signaling, where the first signaling is one of downlink control information (downlink control information, DCI), a radio resource control (radio resource control, RRC) information element, and a media access control control element (media access control control element, MAC CE).

If each of the plurality of antenna panels is associated with one PUSCH, at least two of the plurality of identifiers are carried in different signaling, where the signaling is one or more of DCI, an RRC information element, and a MAC CE. For example, four identifiers indicate whether four antenna panels are available, and each of the four antenna panels is associated with one PUSCH. An identifier 1, an identifier 2, and an identifier 3 may be carried in signaling 1, and an identifier 4 may be carried in signaling 2; or the identifier 1 and the identifier 2 may be carried in the signaling 1, and the identifier 3 and the identifier 4 may be carried in the signaling 2.

Optionally, when the second information is a PUSCH, each of the plurality of identifiers is used for PUSCH transmission. When different antenna panels are associated with different PUSCHs, different identifiers may correspond to different PUSCHs. When the plurality of antenna panels are associated with a same PUSCH, different identifiers may correspond to the same PUSCH, and the plurality of identifiers included in the first information are all used for PUSCH transmission. For example, two identifiers indicate whether two antenna panels are available. It is assumed that an identifier 1 indicates whether a panel 1 is available, and an identifier 2 indicates whether a panel 2 is available. If the panel 1 is used for transmission at n1 layers of a PUSCH, and the panel 2 is used for transmission at n2 layers of the same PUSCH, the two identifiers correspond to the PUSCH, the identifier 1 is used for transmission at the n1 layers of the PUSCH, and the identifier 2 is used for transmission at the n2 layers of the PUSCH.

Optionally, the identifier may be an MCS field or a transmission precoding matrix indicator (transmission precoding matrix indicator, TPMI) field. For example, different values of the MCS field may indicate different MCS indexes, one MCS index corresponds to one MCS (including a modulation order, a target bit rate, and spectral efficiency), and the MCS is used for PUSCH transmission. For example, the MCS is used to perform symbol modulation and channel coding on data transmitted on a PUSCH. Different values of the TPMI field may indicate different TPMI indexes, one TPMI index corresponds to one precoding matrix (precoding matrix indicator, PMI) and one rank indicator (rank indicator, RI), and the PMI and the RI are used for PUSCH transmission. For example, the RI may be used to determine a number of layers of a PUSCH, and the PMI may be used to precode data obtained after layer mapping.

For example, a correspondence between an MCS index and an MCS may be shown in Table 2. Table 2 merely describes a correspondence between some MCS indexes and some MCSs as an example. That the correspondence between an MCS index and an MCS is definitely shown in Table 2 is not limited in this application.

**Table 2**

| MCS index (IMCS) | Modulation order (Qm) | Target bit rate [×1024] | Spectral efficiency |
| --- | --- | --- | --- |
| 0 | q | 240/q | 0.2344 |
| 1 | q | 314/q | 0.3770 |
| 2 | 2 | 193 | 0.3770 |
| ... | ... | ... | ... |
| 27 | 6 | 948 | 5.5547 |
| 28 | q | Reserved (reserved) | |
| 29 | 2 | Reserved (reserved) | |
| 30 | 4 | Reserved (reserved) | |
| 31 | 6 | Reserved (reserved) | |

For example, an identifier is an MCS field, and the number of the plurality of antenna panels is equal to 2. If the first information is sent by the network device, the network device may send one piece of signaling to the terminal device, where the signaling carries two MCS fields that respectively correspond to two antenna panels, and the signaling may be DCI.

For an implementation in which an identifier indicates whether an antenna panel is available, for example, when an identifier value associated with an antenna panel i belongs to a first value set, the antenna panel i is available; or when the identifier value associated with the antenna panel i belongs to a second value set, the antenna panel i is unavailable. The antenna panel i is one of the plurality of antenna panels, and i is a natural number. The first value set is a set associated with the antenna panel i, and the second value set is a set associated with the antenna panel i.

For example, if an identifier is an MCS field, when a value of an MCS field associated with the antenna panel i belongs to the first value set, the antenna panel i is available; or when the value of the MCS field associated with the antenna panel i belongs to the second value set, the antenna panel i is unavailable. For descriptions of an identifier being a TPMI field, refer to the descriptions of an identifier being an MCS field. Details are not described herein again.

Optionally, when an identifier is an MCS field, the first value set and the second value set include an MCS index. For example, a target bit rate and spectral efficiency in an MCS corresponding to the MCS index included in the first value set are defined, and a target bit rate and frequency efficiency in an MCS corresponding to the MCS index included in the second value set are not defined, that is, are in a reserved state. Assuming that the correspondence between an MCS index and an MCS is shown in Table 2, the first value set includes MCS indexes 1 to 27, and the second value set includes MCS indexes 28 to 31.

For example, two MCS fields indicate whether two antenna panels are available, an MCS field 1 indicates whether a panel 1 is available, and an MCS field 2 indicates whether a panel 2 is available. Assuming that a value of the MCS field 1 is 3, the panel 1 is available because the value 3 of the MCS field 1 belongs to the first value set. Assuming that a value of the MCS field 2 is 29, the panel 2 is unavailable because the value 29 of the MCS field 2 belongs to the second value set.

Optionally, different antenna panels may be associated with a same value set. For example, when an identifier value associated with each of the plurality of antenna panels belongs to the first value set, the antenna panel is available; or when the identifier value associated with each antenna panel belongs to the second value set, the antenna panel is unavailable. Alternatively, different antenna panels may be associated with different value sets. For example, when an identifier value associated with the panel 1 belongs to the first value set, the panel 1 is available, or when the identifier value associated with the panel 1 belongs to the second value set, the panel 1 is unavailable; and when an identifier value associated with the panel 2 belongs to a third value set, the panel 2 is available, or when the identifier value associated with the panel 2 belongs to a fourth value set, the panel 2 is unavailable, where the first value set is different from the third value set, and the second value set is different from the fourth value set.

It is assumed that when an identifier is an MCS field, the first value set may include MCS indexes 1 to 13, the third value set may include MCS indexes 14 to 27, the second value set may include MCS indexes 14 to 31, and the fourth value set may include MCS indexes 1 to 13, 30, and 31. For example, two MCS fields indicate whether two antenna panels are available, an MCS field 1 indicates whether a panel 1 is available, and an MCS field 2 indicates whether a panel 2 is available. If a value of the MCS field 1 is set to 3, the panel 1 is available because the value 3 of the MCS field 1 belongs to the first value set; or if the value of the MCS field 1 is 16, the panel 1 is available because the value 16 of the MCS field 1 belongs to the first value set. If a value of the MCS field 2 is 20, the panel 2 is available because the value 20 of the MCS field 2 belongs to the third value set; or if the value of the MCS field 2 is 31, the panel 2 is unavailable because the value 31 of the MCS field 2 belongs to the fourth value set.

In another possible implementation, each of the plurality of antenna panels is used for PUCCH or SRS transmission. In other words, the second information is a PUCCH and/or an SRS.

Optionally, when the antenna panel is used for PUCCH or SRS transmission, and the first information is sent by the network device, the plurality of identifiers included in the first information are carried in at least one MAC CE. The MAC CE indicates a spatial relation (spatial relation) of the PUCCH or the SRS, or the MAC CE is a spatial relation activation (spatial relation activation) MAC CE of the PUCCH or the SRS.

For example, one identifier may be one reserved bit in the MAC CE, and a value of the reserved bit may indicate whether an antenna panel associated with the reserved bit is available. For example, when the value of the reserved bit is a first value, it indicates that the antenna panel associated with the reserved bit is available; or when the value of the reserved bit is a second value, it indicates that the antenna panel associated with the reserved bit is unavailable. The first value may be 1, and correspondingly the second value is 0; or the first value may be 0, and correspondingly the second value is 1. This is not specifically limited in this application.

Manner 2: That the first information is used to determine N antenna panels includes: The first information includes one identifier, and the one identifier indicates whether a plurality of antenna panels are available.

The plurality of antenna panels include at least the N antenna panels. For descriptions of the plurality of antenna panels, refer to the related descriptions of Manner 1. Details are not described herein again.

In a possible implementation, the one identifier may be one bitmap (bitmap), and a length of the bitmap is the same as the number of the plurality of antenna panels. One bit in the bitmap is associated with one antenna panel, and a value of a specific bit in the bitmap may indicate whether an antenna panel associated with the bit is available. For example, when a value of a specific bit is a first value, an antenna panel associated with the bit is available; or when a value of a specific bit is a second value, an antenna panel associated with the bit is unavailable. For the first value and the second value, refer to the foregoing related descriptions. Details are not described herein again.

In another possible implementation, the one identifier may indicate one group of values of an MCS field. The one group of values of the MCS field may include a plurality of values that respectively correspond to the plurality of antenna panels. Whether the antenna panels corresponding to the plurality of values are available may be determined based on the values. For example, the number of the plurality of antenna panels is equal to 2. The network device may preconfigure various combinations of values of two MCS fields by using an RRC information element. For example, one MCS field has 32 values in total. The network device may preconfigure 32x32 combinations. Then, the network device may activate some combinations by using a MAC CE, for example, may activate 32 combinations. Finally, the network device may add the one identifier to DCI to indicate to activate one of the 32 combinations. The terminal device may learn, by using the identifier, one MCS field value combination indicated by the network device (including the values of the two MCS fields, where the values of the two MCS fields each correspond to one antenna panel), and determine, by using the combination, whether the antenna panel corresponding to each of the values of the two MCS fields is available. For an implementation of determining, based on a value of an MCS field, whether an antenna panel is available, refer to the related descriptions in Manner 1. Details are not described herein again.

In still another possible implementation, the one identifier may be one MCS field. Different values of the one MCS field in this manner may indicate one MCS index, the one MCS index may correspond to a plurality of MCSs, and each MCS corresponds to one antenna panel. In this case, for example, when the number of the plurality of antenna panels is equal to 2, a correspondence between an MCS index and an MCS may be shown in Table 3, that is, one MCS index may correspond to two MCSs.

**Table 3**

| MCS index ($I_{MCS}$) | Modulation order (Qm) | Target bit rate [$\times 1024$] | Spectral efficiency |
|---|---|---|---|
| 0 | Modulation order 00 | Target bit rate 00 | Spectral efficiency 00 |
| | Modulation order 01 | Target bit rate 01 | Spectral efficiency 01 |
| 1 | Modulation order 10 | Target bit rate 10 | Spectral efficiency 10 |
| | Modulation order 11 | Target bit rate 11 | Spectral efficiency 11 |
| ... | ... | ... | ... |
| 30 | Modulation order 300 | Target bit rate 300 | Spectral efficiency 300 |
| | Modulation order 301 | Reserved (reserved) | |
| 31 | Modulation order 310 | Reserved (reserved) | |
| | Modulation order 311 | Reserved (reserved) | |

Optionally, after obtaining one MCS field, the terminal device may determine, based on a plurality of MCSs corresponding to a value (namely, an MCS index) of the MCS field, whether an antenna panel corresponding to each MCS is available. For example, the terminal device may determine, depending on whether a target bit rate and/or spectral efficiency in the MCS are/is defined, whether the antenna panel is available. For details, refer to the related descriptions in Manner 1. Details are not described herein again.

For example, the number of the plurality of antenna panels is equal to 2, and the correspondence between an MCS index and an MCS is shown in Table 3. It is assumed that the value of the MCS field is 30, a 1st MCS corresponding to the MCS field is the modulation order 300, the target bit rate 300, and the spectral efficiency 300, and a 2nd MCS corresponding to the MCS field is the modulation order 301, and the target bit rate and spectral efficiency "reserved". Because the target bit rate and the spectral efficiency of the 1st MCS are defined, an antenna panel corresponding to the 1st MCS is available. Because the target bit rate and the spectral efficiency of the 2nd MCS are reserved, an antenna panel corresponding to the 2nd MCS is unavailable.

Manner 3: That the first information is used to determine N antenna panels includes: The first information indicates the N antenna panels.

Optionally, the first information may be identifiers of the N antenna panels. For example, when the N antenna panels are one antenna panel, the first information may include an identifier of the antenna panel.

Alternatively, when the first information is sent by the network device, each of the plurality of antenna panels may correspond to one information element in signaling sent by the network device. In this way, whether there is an information element in the signaling may indicate whether an antenna panel corresponding to the information element is available. For example, in the signaling sent by the network device, if there is an information element, it may indicate that an antenna panel corresponding to the information element is available, where information carried in the information element is the first information.

Manner 4: That the first information is used to determine N antenna panels includes: The first information indicates K-N unavailable antenna panels in the K antenna panels.

In this manner, the N antenna panels are antenna panels other than the K-N antenna panels indicated by the first information in the K antenna panels.

Optionally, the first information may be identifiers of the K-N antenna panels. Alternatively, when the first information is sent by the network device, each of the plurality of antenna panels may correspond to one information element in signaling sent by the network device. In this way, whether there is an information element in the signaling may indicate whether an antenna panel corresponding to the information element is available. For example, in the signaling sent by the network device, if there is an information element, it may indicate that an antenna panel corresponding to the information element is unavailable, where information carried in the information element is the first information.

An application procedure of the method shown in FIG. 6 is described below by using an example in which the first information is generated and sent by the network device, the first information is implemented in Manner 1, the identifier is an MCS field, the terminal device is provided with the panel 1 and the panel 2, and the second information is a PUSCH. With reference to FIG. 7, the procedure includes the following steps.

S701: The terminal device sends at least one SRS to the network device by using the panel 1, and sends at least one SRS to the network device by using the panel 2. Correspondingly, the network device receives the at least one SRS sent by the terminal device by using the panel 1, and receives the at least one SRS sent by the terminal device by using the panel 2.

S702: The network device performs channel detection based on the at least one SRS sent by the terminal device by using the panel 1, to determine a channel matrix $H_1$ corresponding to the panel 1, and performs channel detection based on the at least one SRS sent by the terminal device by using the panel 2, to determine a channel matrix $H_2$ corresponding to the panel 2.

Optionally, if the terminal device sends one SRS to the network device by using the panel 1, the network device performs channel detection on the one SRS, to determine the channel matrix $H_1$ corresponding to the panel 1. If the terminal device sends a plurality of SRSs to the network device by using the panel 1, the network device measures the plurality of SRSs, selects an SRS with strongest signal quality based on a measurement result, and performs channel detection based on the SRS with strongest signal quality, to determine the channel matrix $H_1$ corresponding to the panel 1. For detection performed by the network device on the channel matrix $H_2$ corresponding to the panel 2, refer to the related descriptions of detection performed on the channel matrix corresponding to the panel 1. Details are not described herein again.

Optionally, if the terminal device sends a plurality of SRSs to the network device by using the panel 1, after the network device selects an SRS with strongest signal quality, the network device may learn an SRS resource indicator (SRS resource indicator, SRI) (denoted as SRI1) corresponding to the SRS with strongest signal quality. When the terminal device sends one SRS to the network device by using the panel 2, the terminal device may use an SRI corresponding to the one SRS as SRI1 without an indication of the network device. Similarly, there is SRI2 corresponding to the panel 2.

S703: The network device determines, based on the channel matrix $H_1$ corresponding to the panel 1 and the channel matrix $H_2$ corresponding to the panel 2, MCS1 corresponding to the panel 1 and MCS2 corresponding to the panel 2.

Optionally, if both the panel 1 and the panel 2 are used to send a codebook-based PUSCH, the network device may determine, with reference to the channel matrix $H_1$ corresponding to the panel 1 and the channel matrix $H_2$ corresponding to the panel 2, MCS1 corresponding to the panel 1, and determine, with reference to the channel matrix $H_1$ corresponding to the panel 1 and the channel matrix $H_2$ corresponding to the panel 2, MCS2 corresponding to the panel 2. Further, the network device may determine, with reference to the channel matrix $H_1$ corresponding to the panel 1 and the channel matrix $H_2$ corresponding to the panel 2, an RI (denoted as RI1) and a PMI (denoted as PMI1) corresponding to the panel 1, and RI2 and PMI2 corresponding to the panel 2.

If the panel 1 is used to send a codebook-based PUSCH, and the panel 2 is used to send a non-codebook-based PUSCH, the network device may determine, with reference to the channel matrix $H_1$ corresponding to the panel 1 and the channel matrix $H_2$ corresponding to the panel 2, MCS1, RI1, and PMI1 corresponding to the panel 1, and MCS2 corresponding to the panel 2. In addition, a precoding matrix corresponding to the panel 2 may be learned by using the channel matrix $H_2$ corresponding to the panel 2.

If both the panel 1 and the panel 2 are used to send a non-codebook-based PUSCH, the network device may determine, with reference to the channel matrix $H_1$ corresponding to the panel 1 and the channel matrix $H_2$ corresponding to the panel 2, MCS1 corresponding to the panel 1 and MCS2 corresponding to the panel 2. In addition, a precoding matrix corresponding to the panel 1 may be learned by using the channel matrix $H_1$ corresponding to the panel 1, and a precoding matrix corresponding to the panel 2 may be learned by using the channel matrix $H_2$ corresponding to the panel 2.

Optionally, the network device may preconfigure, by using an RRC information element (for example, *PUSCH-config*), a specific antenna panel for sending a codebook-based PUSCH or a non-codebook-based PUSCH.

S704: The network device sends at least one piece of signaling to the terminal device. Correspondingly, the terminal device receives the at least one piece of signaling from the network device.

The at least one piece of signaling sent by the network device includes the first information, and the first information is the MCS field 1 corresponding to the panel 1 and the MCS field 2 corresponding to the panel 2. The MCS field 1 indicates an MCS index 1, and the MCS index 1 corresponds to MCS1. The MCS field 2 indicates an MCS index 2, and the MCS index 2 corresponds to MCS2.

Optionally, the at least one piece of signaling may further include one or more of RI1, PMI1, or SRI1 corresponding to the panel 1 and one or more of RI2, PMI2, or SRI2 corresponding to the panel 2.

Optionally, the signaling may be one or more of DCI, an RRC information element, or a MAC CE. Certainly, there may alternatively be other signaling. This is not specifically limited in this application.

Optionally, when the panel 1 and the panel 2 are associated with a same PUSCH, information corresponding to the panel 1 and information corresponding to the panel 2 may be carried in same signaling. When the panel 1 and the panel 2 are associated with different PUSCHs, the information corresponding to the panel 1 and the information corresponding to the panel 2 may be carried in different signaling.

S705: The terminal device determines, based on the MCS field 1, whether the antenna panel 1 is available, and determines, based on the MCS field 2, whether the antenna panel 2 is available.

For descriptions of determining, based on an MCS field, whether an antenna panel is available, refer to the related descriptions in Manner 1. Details are not described herein again.

Optionally, if a specific antenna panel is unavailable, the terminal device may consider that the network device does not schedule the antenna panel for transmission. In this case, a field originally indicating an RI, a PMI, or an SRI corresponding to the antenna panel may be used to carry other information, to reduce a waste of signaling resources.

Optionally, when an antenna panel is available, it may be considered that a state of the antenna panel is enabled (enabled). When an antenna panel is unavailable, it may be considered that a state of the antenna panel is disabled (disabled). In other words, in this application, disabling an antenna panel may be understood as that the antenna panel is unavailable.

For example, if both the antenna panel 1 and the antenna panel 2 are available, a communication panel that is determined by the terminal device and that is used to transmit the second information is the antenna panel 1 and the antenna panel 2.

S706: The terminal device performs PUSCH transmission by using an available antenna panel.

Optionally, when the terminal device transmits the second information by using the available antenna panel, the terminal device may first perform layer mapping and precoding on the second information by using the RI and the PMI, and then transmit, by using the antenna panel, information obtained after layer mapping and precoding are performed on the second information.

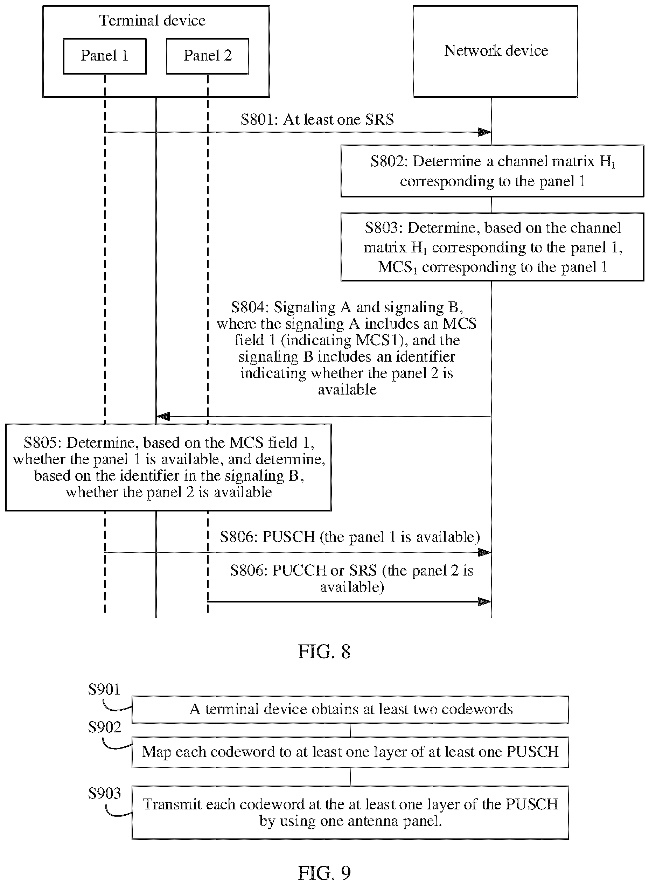

In some embodiments, the antenna panel of the terminal device may be used to transmit information of different types. For example, if the panel 1 of the terminal device is used for PUSCH transmission, and the panel 2 is used for PUCCH or SRS transmission, an application procedure of the method shown in FIG. 6 may be shown in FIG. 8. With reference to FIG. 8, the procedure includes the following steps.

S801: The terminal device sends at least one SRS to the network device by using the panel 1. Correspondingly, the network device receives the at least one SRS sent by the terminal device by using the panel 1.

S802: The network device performs channel detection based on the at least one SRS sent by the terminal device by using the panel 1, to determine a channel matrix $H_1$ corresponding to the panel 1. Refer to the related descriptions of step S702. Details are not described herein again.

S803: The network device determines, based on the channel matrix $H_1$ corresponding to the panel 1, MCS1 corresponding to the panel 1.

S804: The network device sends signaling A and signaling B to the terminal device. Correspondingly, the terminal device receives the signaling A and the signaling B from the network device.

The signaling A includes the MCS field 1 corresponding to the panel 1, the MCS field 1 indicates an MCS index 1, and the MCS index 1 corresponds to MCS1. The signaling A may be one of DCI, an RRC information element, and a MAC CE.

The signaling B is a MAC CE. When the panel 2 is used for PUCCH transmission, the MAC CE is used to indicate a spatial relation of a PUCCH. When the panel 2 is used for SRS transmission, the MAC CE is used to indicate a spatial relation of an SRS. The MAC CE includes an identifier indicating whether the panel 2 is available.

Optionally, the signaling B may further include an identifier indicating whether the panel 1 is available. The identifier indicating whether the panel 1 is available may also be a reserved bit in the MAC CE.

S805: The terminal device determines, based on the MCS field 1 in the signaling A, whether the antenna panel 1 is available, and determines, based on the identifier in the signaling B, whether the antenna panel 2 is available. Refer to the related descriptions in Manner 1 Details are not described herein again.

Optionally, when the signaling B further includes the identifier indicating whether the panel 1 is available, in step S805, the terminal device may not determine, based on the MCS field 1 in the signaling A, whether the antenna panel 1 is available, but determine, based on the identifier that is included in the signaling B and that indicates whether the panel 1 is available, whether the panel 1 is available.

S806: If the panel 1 is available, the terminal device performs PUSCH transmission by using the panel 1. If the panel 2 is available, the terminal device performs PUCCH or SRS transmission by using the panel 2.

The foregoing describes selection of an antenna panel in a multi-antenna-panel scenario. In addition, this application further provides a communication method. The method may be applied to codeword mapping in a multi-antenna-panel scenario. As shown in FIG. 9, the communication method includes the following steps.

S901: A terminal device obtains at least two codewords.

S902: The terminal device maps each of the at least two codewords to at least one layer of one PUSCH.

Optionally, mapping a codeword to at least one layer of a PUSCH may also be understood as mapping a symbol obtained after the codeword is modulated to the at least one layer of the PUSCH.

S903: Transmit each of the at least two codewords at the at least one layer of the one PUSCH by using one antenna panel.

In other words, one codeword is mapped to at least one layer of one PUSCH, and one antenna panel is used for transmission at the at least one layer of the PUSCH.

Optionally, when an antenna panel is used to transmit a codebook-based PUSCH, a number of layers of the PUSCH transmitted by using the antenna panel may be determined based on an RI. When an antenna panel is used to transmit a non-codebook-based PUSCH, a number of layers of the PUSCH transmitted by using the antenna panel may be determined based on an SRI.

Optionally, when a number L of layers of a PUSCH transmitted on a specific antenna panel is greater than or equal to a first threshold, a plurality of codewords may be mapped to the L layers of the PUSCH and transmitted by using the antenna panel. When a number L of layers of a PUSCH transmitted on a specific antenna panel is less than or equal to the first threshold, one codeword may be mapped to the L layers of the PUSCH and transmitted by using the antenna panel.

Optionally, the first threshold may be a positive integer greater than or equal to 2. For example, the first threshold may be 2, or the first threshold may be 4.

Optionally, the antenna panel for PUSCH transmission in step S903 may be selected by the terminal device by using the method shown in FIG. 6. Certainly, the antenna panel may alternatively be selected by the terminal device in another manner. This is not specifically limited in this application.

Based on this solution, each codeword is mapped to at least one layer of one PUSCH and is transmitted by using one antenna panel. In this way, an MCS of a codeword transmitted on a specific antenna panel may be matched based on a channel that the antenna panel passes through, thereby resolving panel MCS imbalance caused because only one codeword is mapped to at least one layer of a PUSCH in the conventional technology, and improving transmission efficiency.

In some embodiments, in step S902, when each of the at least two codewords is mapped to at least one layer of one PUSCH, different codewords may be mapped to the at least one layer of the one PUSCH.

In a possible implementation, when the at least two codewords are a first codeword and a second codeword, the first codeword may be mapped to n1 layers of a first PUSCH, and the second codeword may be mapped to n2 layers of the first PUSCH, where n1 and n2 are positive integers. Further, n1 and n2 are less than the first threshold. Correspondingly, in step S903, the first codeword may be transmitted at the n1 layers of the first PUSCH by using one antenna panel in two antenna panels, and the second codeword may be transmitted at the n2 layers of the first PUSCH by using the other antenna panel in the two antenna panels.

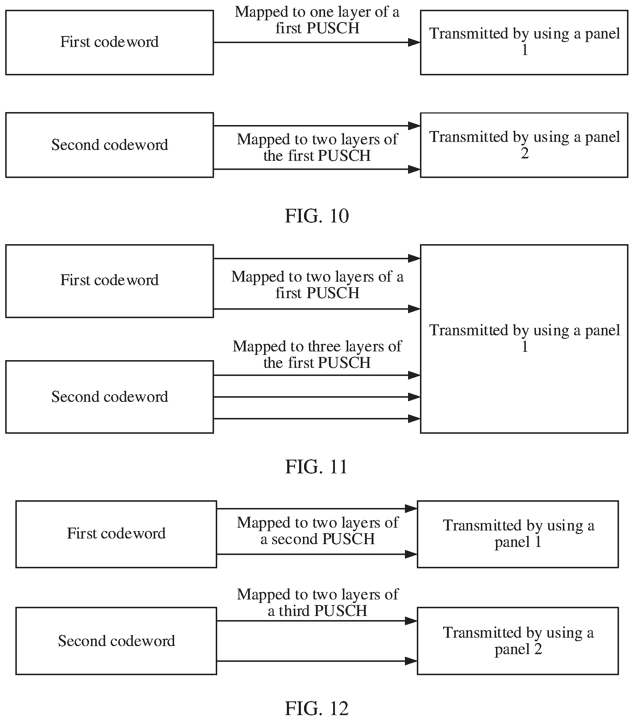

For example, if n1 is equal to 1, n2 is equal to 2, and the two antenna panels are a panel 1 and a panel 2, as shown in FIG. 10, the first codeword is mapped to one layer of the first PUSCH and is transmitted by using the panel 1, and the second codeword is mapped to two layers of the first PUSCH and is transmitted by using the panel 2.

Optionally, in this possible implementation, the first codeword corresponds to a first MCS, and the second codeword corresponds to a second MCS, where the first MCS is associated with the panel 1, and the second MCS is associated with the panel 2. For example, the terminal device may send an SRS to a network device by using the panel 1, and send an SRS to the network device by using the panel 2. After receiving the SRSs sent by the terminal device by using the panel 1 and the panel 2, the network device may perform channel detection, determine the first MCS and the second MCS, and then indicate the first MCS and the second MCS to the terminal device. For details, refer to the related descriptions in steps S701 to S703. Details are not described herein again.

In another possible implementation, when the first codeword is mapped to n1 layers of a first PUSCH, the second codeword is mapped to n2 layers of the first PUSCH, and a sum of n1 and n2 is greater than or equal to the first threshold, correspondingly, in step S903, the first codeword and the second codeword may be transmitted at the n1 layers of the first PUSCH and the n2 layers of the first PUSCH by using a same antenna panel.

For example, if n1 is equal to 2, and n2 is equal to 3, as shown in FIG. 11, the first codeword is mapped to two layers of the first PUSCH, and the second codeword is mapped to three layers of the first PUSCH, and both are transmitted by using a panel 1.

Optionally, in this possible implementation, the first codeword corresponds to a first MCS, and the second codeword corresponds to a second MCS, where the first MCS and the second MCS may be different. In other words, when transmission is performed at different layers of a same PUSCH by using a same antenna panel, a plurality of layers of the PUSCH may correspond to two MCSs. For example, in the example shown in FIG. 11, the first two layers of the first PUSCH correspond to the first MCS, and the last three layers correspond to the second MCS. Certainly, the first MCS and the second MCS may alternatively be the same. This is not specifically limited in this application. In addition, for a manner of obtaining the first MCS and the second MCS, refer to the foregoing related descriptions. Details are not described herein again.

In some other embodiments, in step S902, different codewords may be mapped to at least one layer of different PUSCHs. For example, when the at least two codewords are a first codeword and a second codeword, the first codeword may be mapped to at least one layer of a second PUSCH, and the second codeword may be mapped to at least one layer of a third PUSCH.

Correspondingly, in step S903, the first codeword may be transmitted at the at least one layer of the second PUSCH by using one antenna panel in two antenna panels; and the second codeword may be transmitted at the at least one layer of the third PUSCH by using the other antenna panel in the two antenna panels. Optionally, a number of layers of the second PUSCH for transmission by using the one antenna panel in the two antenna panels is less than or equal to the first threshold, and a number of layers of the third PUSCH for transmission by using the other antenna panel in the two antenna panels is less than or equal to the first threshold.

For example, if the first codeword is mapped to two layers of the second PUSCH, the second codeword is mapped to two layers of the third PUSCH, and the two antenna panels are a panel 1 and a panel 2, as shown in FIG. 12, the first codeword is mapped to the two layers of the second PUSCH and is transmitted by using the panel 1, and the second codeword is mapped to the two layers of the third PUSCH and is transmitted by using the third PUSCH.

Optionally, in this embodiment, the first codeword corresponds to a first MCS, and the second codeword corresponds to a second MCS. For a manner of obtaining the first MCS and the second MCS, refer to the foregoing related descriptions. Details are not described herein again.

In some other embodiments, when a number of codewords obtained in step S901 is greater than 2, in step S902, a plurality of codewords may be mapped to at least one layer of one PUSCH.

For example, if the at least two codewords are a first codeword, a second codeword, and a third codeword, the first codeword may be mapped to x1 layers of a PUSCH #a, the second codeword may be mapped to x2 layers of the PUSCH #a, and the third codeword may be mapped to x3 layers of the PUSCH #a.

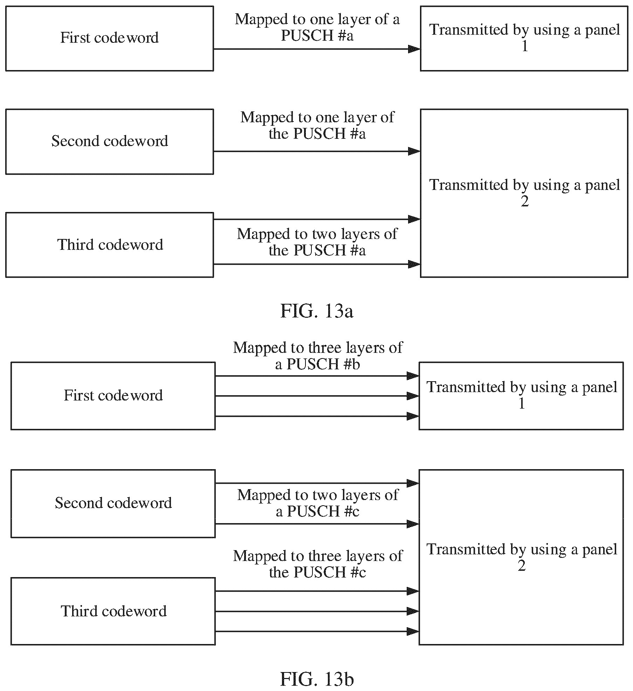

For example, if x1 is equal to 1, x2 is equal to 1, x3 is equal to 2, and the two antenna panels are a panel 1 and a panel 2, as shown in FIG. 13a, the first codeword is mapped to one layer of the PUSCH #a and is transmitted by using the panel 1, the second codeword is mapped to one layer of the PUSCH #a, the third codeword is mapped to two layers of the PUSCH #a, and both the second codeword and the third codeword are transmitted by using the panel 2.

Alternatively, when a number of codewords obtained in step S901 is greater than 2, in step S902, a plurality of codewords may be mapped to at least one layer of a plurality of PUSCHs.

For example, if the at least two codewords are a first codeword, a second codeword, and a third codeword, the first codeword may be mapped to at least one layer of a PUSCH #b, the second codeword may be mapped to x4 layers of a PUSCH #c, and the third codeword may be mapped to x5 layers of the PUSCH #c.

For example, if x4 is equal to 2, and x5 is equal to 3, as shown in FIG. 13b, the first codeword is mapped to two layers of the PUSCH #b and is transmitted by using the panel 1, the second codeword is mapped to two layers of the PUSCH #c, the third codeword is mapped to three layers of the PUSCH #c, and both the second codeword and the third codeword are transmitted by using the panel 2.

It should be noted that the foregoing mainly uses an example in which layer mapping and transmission are performed on two codewords or three codewords for description. When the number of codewords obtained by the terminal device is greater than 3, implementations of codeword-to-layer mapping and a manner of performing PUSCH transmission by using an antenna panel are similar to implementations used when the number of codewords is 2 or 3. For details, refer to the foregoing related descriptions. Details are not described herein again.

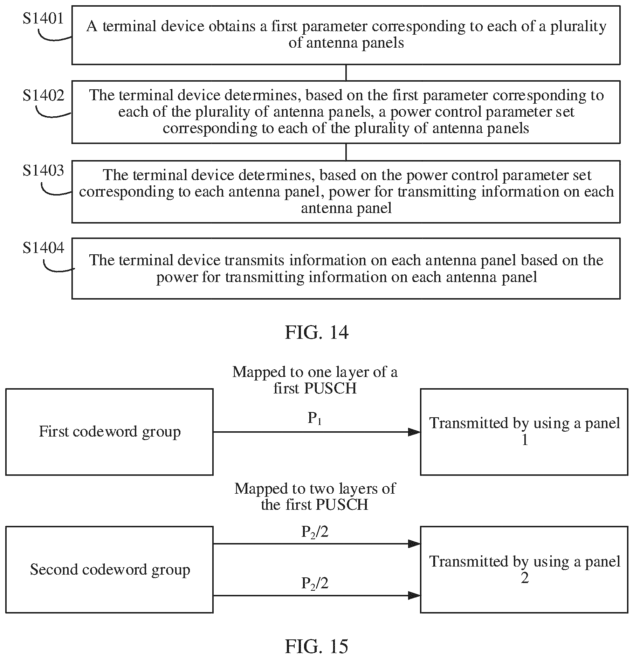

In addition to the communication method shown in FIG. 6 or FIG. 9, this application further provides a communication method. The method may be applied to power control in a multi-antenna-panel scenario. As shown in FIG. 14, the communication method includes the following steps.

S1401: A terminal device obtains a first parameter corresponding to each of a plurality of antenna panels.

Optionally, the plurality of antenna panels may be antenna panels used by the terminal device for information transmission. For ease of description, in the following embodiment of this application, a number of the plurality of antenna panels is denoted as N, and correspondingly the plurality of antenna panels may also be described as N antenna panels.

Optionally, the N antenna panels may be selected by the terminal device after the terminal device performs the communication method shown in FIG. 6, or may be determined by the terminal device in another manner. This is not specifically limited in this application.

A first parameter corresponding to a specific antenna panel is used to determine a power control parameter set corresponding to the antenna panel. A power control parameter set corresponding to a specific antenna panel is used to determine power for transmitting information on the antenna panel.

Optionally, the first parameter is a parameter associated with an antenna panel; or the first parameter is a parameter specific to an antenna panel. For example, when a specific antenna panel is used for transmitting a PUSCH, a first parameter corresponding to the antenna panel may be an SRI; when a specific antenna panel is used for transmitting a PUCCH, a first parameter corresponding to the antenna panel may be a spatial relation of the PUCCH transmitted on the antenna panel; and when a specific antenna panel is used for transmitting an SRS, a first parameter corresponding to the antenna panel may be a resource of the SRS transmitted on the antenna panel.

Optionally, a network device may obtain the first parameter corresponding to each of the plurality of antenna panels, and send the first parameter to the terminal device. In other words, step S1401 may be: The terminal device receives the first parameter corresponding to each of the plurality of antenna panels from the network device.

S1402: The terminal device determines, based on the first parameter corresponding to each of the plurality of antenna panels, a power control parameter set corresponding to each of the plurality of antenna panels.

It should be noted that, in step S1402, the terminal device determines, based on a first parameter corresponding to a specific antenna panel, a power control parameter set corresponding to the antenna panel. For example, a power control parameter set corresponding to an antenna panel n is determined based on a first parameter corresponding to the antenna panel n, where $n = 0,1,...,N - 1$, or $n=1,2,...,N.$

Optionally, there may be a correspondence between a first parameter and a power control parameter set. For example, a first parameter 1 corresponds to a power control parameter set 1, and a first parameter 2 corresponds to a power control parameter set 2. Therefore, the terminal device may determine, based on a first parameter corresponding to a specific antenna panel and the correspondence between a first parameter and a power control parameter set, a power control parameter set corresponding to the antenna panel.

S1403: The terminal device determines, based on the power control parameter set corresponding to each antenna panel, power for transmitting information on each antenna panel.

It should be noted that, in step S1403, the terminal device determines, based on a power control parameter set corresponding to a specific antenna panel, power for transmitting information on the antenna panel. For example, power for transmitting information on the antenna panel n is determined based on the power control parameter set corresponding to the antenna panel n, where $n = 0,1,...,N-1$, or $n = 1,2,...,N.$

Optionally, information transmitted on an antenna panel may be one or more of a PUSCH, a PUCCH, an SRS, or a PRACH. The PUSCH may be a codebook-based PUSCH or a non-codebook-based PUSCH.

Optionally, information transmitted on different antenna panels may be of different types. For example, a PUSCH is transmitted on an antenna panel, and a PUCCH is transmitted on another antenna panel. Alternatively, information transmitted on different antenna panels may be of a same type, but has different information content. For example, a PUSCH #1 is transmitted on an antenna panel, and a PUSCH #2 is transmitted on another antenna panel. This is not specifically limited in this application.

S1404: The terminal device transmits information on each antenna panel based on the power for transmitting information on each antenna panel.

It should be noted that, in step S1404, the terminal device transmits information on a specific antenna panel based on power for transmitting information on the antenna panel. For example, information is transmitted on the antenna panel n based on the power for transmitting information on the antenna panel n, where $n = 0,1,...,N-1,$ or $n =1,2,...,N.$

Based on this solution, the terminal device determines, based on the first parameter, the power control parameter set corresponding to each of the plurality of antenna panels, and determines the power that is for transmitting information and that corresponds to each of the plurality of antenna panels, so that power for transmitting information on different antenna panels can be independently calculated, that is, each antenna panel can perform independent power control, making power control more accurate, thereby improving information transmission efficiency.

The foregoing describes an overall procedure of the communication method. The following describes the steps in the communication method in detail by using an example in which N is equal to 2, to be specific, the plurality of antenna panels are two antenna panels, one antenna panel in the two antenna panels is referred to as a panel 1, and the other antenna panel in the two antenna panels is referred to as a panel 2.

When the two antenna panels are used for PUSCH transmission:

In step S1401, that a terminal device obtains a first parameter corresponding to each of a plurality of antenna panels may include: The terminal device sends a first SRS by using the panel 1, to obtain a first SRI corresponding to the first SRS; and sends a second SRS by using the panel 2, to obtain a second SRI corresponding to the second SRS. In other words, a first parameter corresponding to the panel 1 is the first SRI, and a first parameter corresponding to the panel 2 is the second SRI.

Optionally, the terminal device may send a plurality of SRSs to the network device by using the panel 1, where the first SRS may be an SRS with strongest signal quality in the plurality of SRSs. For example, the network device may measure the plurality of SRSs, select the first SRS with strongest signal quality based on a measurement result, and indicate the first SRI corresponding to the first SRS to the terminal device. Alternatively, the terminal device may send one SRS to the network device by using the panel 1, where the one SRS is the first SRS. In this case, the terminal device may use an SRI corresponding to the one SRS as the first SRI without an indication of the network device. For a manner of obtaining the second SRI, refer to the manner of obtaining the first SRI. Details are not described herein again.

In step S1402, that the terminal device determines, based on the first parameter corresponding to each of the plurality of antenna panels, a power control parameter set corresponding to each of the plurality of antenna panels may include: The terminal device determines, based on a PUSCH power control parameter set corresponding to the first SRI, a power control parameter set corresponding to the panel 1, and determines, based on a PUSCH power control parameter set corresponding to the second SRI, a power control parameter set corresponding to the panel 2.

For example, after obtaining the first SRI, the terminal device may determine SRI-*PUSCH-PowerControl* corresponding to the first SRI in *PUSCH-PowerControl,* where a PUSCH power control parameter set included in *SRI-PUSCH-PowerControl* is the PUSCH power control parameter set corresponding to the first SRI. For example, the PUSCH power control parameter set may include a path loss reference signal identifier (sri-PUSCH-PathlossReferenceRS-Id), a P0-PUSCH-Alpha set identifier (sri-P0-PUSCH-AlphaSetId), and a closed-loop index (sri-PUSCH-ClosedLoopIndex). Then, the power control parameter set corresponding to the panel 1 may be determined based on the PUSCH power control parameter set corresponding to the first SRI, where the power control parameter set may include receive power expected by the network device, a path loss compensation parameter, a closed-loop power control parameter, uplink path loss estimation, and the like.

For example, when the uplink path estimation is determined, a path loss reference signal (for example, an SSB or a CSI-RS) may be first determined based on *SRI-PUSCH-PowerControl* corresponding to the first SRI, and then the path loss reference signal is measured to obtain path loss estimation, or path loss estimation corresponding to a previously buffered path loss reference signal is read. For a manner of obtaining the power control parameter set corresponding to the panel 2, refer to the manner of obtaining the power control parameter set corresponding to the panel 1. Details are not described herein again.

Optionally, a power control parameter set corresponding to a specific antenna panel may further include one or more of allowed maximum transmit power of a PUSCH, a number of RBs used for PUSCH transmission, a parameter $\mu$ indicating a subcarrier spacing during PUSCH transmission, or an MCS used for PUSCH transmission.

In step S1403, in a possible implementation, that the terminal device determines, based on the power control parameter set corresponding to each antenna panel, power for transmitting information on each antenna panel may include: The terminal device determines first power based on the power control parameter set corresponding to the panel 1 and maximum transmit power of the terminal device, where the first power is power for transmitting information on the panel 1; and determines second power based on the power parameter set corresponding to the panel 2 and the maximum transmit power of the terminal device, where the second power is power for transmitting information on the panel 2.

In an example, in this possible implementation, the power control parameter set corresponding to the panel 1 is used to determine third power, and the power control parameter set corresponding to the panel 2 is used to determine fourth power. In other words, the terminal device may determine the third power based on the power control parameter set corresponding to the panel 1, and determine the fourth power based on the power control parameter set corresponding to the panel 2. For example, a formula of calculating the third power and the fourth power may be shown in Formula (1). For details, refer to the related descriptions of Formula (1). Details are not described herein again.

When a sum of the third power and the fourth power is less than or equal to the maximum transmit power of the terminal device, the first power is equal to the third power, and the second power is equal to the fourth power.

When the sum of the third power and the fourth power is greater than the maximum transmit power of the terminal device, processing may be performed in the following several manners:

Manner 1: The first power is determined based on the third power, the fourth power, and the maximum transmit power of the terminal device, and/or the second power is determined based on the third power, the fourth power, and the maximum transmit power of the terminal device.

For example, the maximum transmit power of the terminal device, the third power, the first power, the fourth power, and the second power satisfy Formula (2) or Formula (3):

$$P_1 = P_3 \cdot P_{max} / (P_3 + P_4), P_2 = P_4 \cdot P_{max} / (P_3 + P_4) \quad (2)$$

; or

$$P_1 = P_3 - \left[ (P_3 + P_4 - P_{max}) / 2 \right], P_2 = P_4 - \left[ (P_3 + P_4 - P_{max}) \right] / 2 \quad (3)$$

, where

$P_{max}$ is the maximum transmit power, $P_1$ is the first power, $P_2$ is the second power, $P_3$ is the third power, and $P_4$ is the fourth power.

It should be noted that, in this application, that a plurality of parameters satisfy a formula means that the plurality of parameters satisfy a relationship expressed in the formula, and is not limited to that the plurality of parameters need to satisfy the formula. For example, the plurality of parameters may further satisfy various variant formulas of the formula.

Manner 2: When the third power is less than the fourth power, the first power is equal to the third power, and the second power satisfies Formula (4):

$$P_2 = P_4 - (P_3 + P_4 - P_{max}) \quad (4)$$

Similarly, when the fourth power is less than the third power, the second power may be equal to the fourth power, and the first power may satisfy Formula (5):

$$P_1 = P_3 - \left( P_3 + P_4 - P_{\max} \right) \quad (5)$$

Manner 3: When a path loss of the panel 1 is less than a path loss of the panel 2, the first power is equal to the third power, and the second power satisfies Formula (4).

Similarly, when the path loss of the panel 2 is less than the path loss of the panel 1, the second power may be equal to the fourth power, and the first power may satisfy Formula (5).

Optionally, the path loss of the panel 1 may be the uplink path loss estimation in the power control parameter set corresponding to the panel 1, and the path loss of the panel 2 may be the uplink path loss estimation in the power control parameter set corresponding to the panel 2.

Manner 4: When a priority of a PUSCH transmitted on the panel 1 is higher than a priority of a PUSCH transmitted on the panel 2, the first power is equal to the third power, and the second power is equal to the fourth power. In addition, during PUSCH transmission, the PUSCH is first transmitted on the panel 1 based on the first power; and after the PUSCH is transmitted on the panel 1, the PUSCH is transmitted on the panel 2, or transmission of the PUSCH on the panel 2 is abandoned.

When the priority of the PUSCH transmitted on the panel 2 is higher than the priority of the PUSCH transmitted on the panel 1, transmission may be performed with reference to Manner 4. Details are not described herein again.

Manner 5: When an MCS corresponding to a PUSCH transmitted on the panel 1 is greater than an MCS corresponding to a PUSCH transmitted on the panel 2, the first power is equal to the third power, and the second power is equal to the fourth power. In addition, during PUSCH transmission, the PUSCH is first transmitted on the panel 1 based on the first power; and after the PUSCH is transmitted on the panel 1, the PUSCH is transmitted on the panel 2, or transmission of the PUSCH on the panel 2 is abandoned.

When the MCS corresponding to the PUSCH transmitted on the panel 2 is greater than the MCS corresponding to the PUSCH transmitted on the panel 1, transmission may be performed with reference to Manner 5. Details are not described herein again.

Optionally, MCS comparison may be implemented through MCS index comparison, or may be implemented through MCS field value comparison.

In step S 1403, in a possible implementation, that the terminal device determines, based on the power control parameter set corresponding to each antenna panel, power for transmitting information on each antenna panel may include: The terminal device determines first power based on the power control parameter set of the panel 1 and maximum transmit power of the panel 1, where the first power is power for transmitting information on the panel 1; and determines second power based on the power control parameter set of the panel 2 and maximum transmit power of the panel 2, where the second power is power for transmitting information on the panel 2.

Optionally, the first power is a smallest value in third power and the maximum transmit power of the panel 1, where the third power is determined based on the power control parameter set of the panel 1; and the second power is a smallest value in fourth power and the maximum transmit power of the panel 2, where the fourth power is determined based on the power control parameter set of the panel 2. For example, a formula of calculating the third power and the fourth power may be shown in Formula (1). For details, refer to the related descriptions of Formula (1). Details are not described herein again. The maximum transmit power of the panel 1 and the panel 2 may be determined by the terminal device.

In step S1404, in a possible implementation, that the terminal device transmits information on each antenna panel based on the power for transmitting information on each antenna may include: The terminal device transmits n1 layers of data of a first PUSCH on the panel 1 based on the first power, and transmits n2 layers of data of the first PUSCH on the other antenna panel based on the second power.

Optionally, when n1 is greater than a second threshold, the power control parameter set corresponding to the panel 1 may not include an MCS used to transmit the n1 layers of data of the first PUSCH, or power control of the panel 1 is unrelated to the MCS used to transmit the n1 layers of data of the first PUSCH. In other words, if n1 is greater than the second threshold, when the third power is calculated by using Formula (1), a parameter related to the MCS used for the PUSCH is equal to 0.

Similarly, when n2 is greater than the second threshold, the power control parameter set corresponding to the panel 2 may not include an MCS used to transmit the n2 layers of data of the first PUSCH, or power control of the panel 2 is unrelated to the MCS used to transmit the n2 layers of data of the first PUSCH. In other words, if n2 is greater than the second threshold, when the fourth power is calculated by using Formula (1), a parameter related to the MCS used for the PUSCH is equal to 0.

Optionally, the MCS used to transmit the n1 layers of data of the first PUSCH and the MCS used to transmit the n2 layers of data of the first PUSCH may be indicated by the network device to the terminal device. For details, refer to the related descriptions in steps S703 and S704. Details are not described herein again.

Optionally, the second threshold may be a positive integer greater than or equal to 1. The second threshold may be defined in a protocol, or may be indicated by the network device to the terminal device. This is not specifically limited in this application.

Optionally, the n1 layers of data of the first PUSCH may be obtained after layer mapping is performed on a first codeword group, that is, a codeword in the first codeword group is mapped to n1 layers of the first PUSCH; and the n2 layers of data of the first PUSCH may be obtained after layer mapping is performed on a second codeword group, that is, a codeword in the second codeword group is mapped to n2 layers of the first PUSCH.

Optionally, if n1 is greater than the first threshold, the first codeword group may include a plurality of codewords; or if n1 is less than or equal to the first threshold, the first codeword group may include one codeword. If n2 is greater than the first threshold, the second codeword group may include a plurality of codewords; or if n2 is less than or equal to the first threshold, the second codeword group may include one codeword. For the first threshold, refer to the related descriptions in the method shown in FIG. 9. Details are not described herein again.

Optionally, in this possible implementation, the first power may be evenly allocated to the n1 layers of the first PUSCH, and the second power may be evenly allocated to the n2 layers of the first PUSCH.

For example, if n1 is equal to 1, and n2 is equal to 2, as shown in FIG. 15, a codeword 1 is mapped to one layer of the first PUSCH and is transmitted on the panel 1 based on the first power (denoted as P1), and a codeword 2 is mapped to two layers of the first PUSCH and is transmitted on the panel 2 based on the second power (denoted as P2).

In step S1404, in a possible implementation, that the terminal device transmits information on each antenna panel based on the power for transmitting information on each antenna may include: The terminal device transmits a second PUSCH on the panel 1 based on the first power, and transmits a third PUSCH on the panel 2 based on the second power.

Optionally, a number of layers of the second PUSCH may be L1, and the first power may be evenly allocated to the L1 layers of the second PUSCH; and a number of layers of the third PUSCH may be L2, and the second power may be evenly allocated to the L2 layers of the third PUSCH.

Optionally, when the number L1 of layers of the second PUSCH is greater than a second threshold, the power control parameter set corresponding to the panel 1 may not include an MCS used to transmit the second PUSCH, or power control of the panel 1 is unrelated to the MCS used to transmit the second PUSCH. In other words, if L1 is greater than the second threshold, when the third power is calculated by using Formula (1), a parameter related to the MCS used for the PUSCH is equal to 0.

Similarly, when the number L2 of layers of the third PUSHC is greater than the second threshold, the power control parameter set corresponding to the panel 2 may not include an MCS used to transmit the third PUSCH, or power control of the panel 2 is unrelated to the MCS used to transmit the third PUSCH. In other words, if L2 is greater than the second threshold, when the fourth power is calculated by using Formula (1), a parameter related to the MCS used for the PUSCH is equal to 0.

Optionally, the MCS used to transmit the second PUSCH and the MCS used to transmit the third PUSCH may be indicated by the network device to the terminal device. For details, refer to the related descriptions in steps S703 and S704. Details are not described herein again.

Optionally, L1 layers of data of the second PUSCH may be obtained after layer mapping is performed on a third codeword group, that is, a codeword in the third codeword group is mapped to the L1 layers of the second PUSCH; and L2 layers of data of the third PUSCH may be obtained after layer mapping is performed on a fourth codeword group, that is, a codeword in the fourth codeword group is mapped to the L2 layers of the third PUSCH. For a number of codewords included in the third codeword group or the fourth codeword group, refer to the related descriptions of the first codeword group. Details are not described herein again.

When the two antenna panels are used for SRS transmission:
In step S 1404, that the terminal device transmits information on each antenna panel based on the power for transmitting information on each antenna may include: The terminal device transmits a third SRS on the panel 1 based on the first power, and transmits a fourth SRS on the panel 2 based on the second power.

In step S 1401, that a terminal device obtains a first parameter corresponding to each of a plurality of antenna panels may include: The terminal device obtains a resource of the third SRS transmitted on the panel 1, and the terminal device obtains a resource of the fourth SRS transmitted on the panel 2. Correspondingly, in step S1402, the power control parameter set corresponding to the panel 1 is a power control parameter set corresponding to the resource of the third SRS, and the power control parameter set corresponding to the panel 2 is a power control parameter set corresponding to the resource of the fourth SRS.

Optionally, the resource of the third SRS and the resource of the fourth SRS may be configured by the network device for the terminal device. For example, the network device may send configuration information to the terminal device, and correspondingly the terminal device receives the configuration information from the network device.

The configuration information is used to configure at least one SRS resource set (SRS resource set), and each SRS resource set may include at least one SRS resource. Each SRS resource in the SRS resource set may correspond to one power control parameter set, and the resource of the third SRS and the resource of the fourth SRS are SRS resources in the at least one SRS set.

Optionally, a power control parameter corresponding to each SRS resource in the SRS resource set may be configured in the SRS resource set, that is, a plurality of power control parameters may be configured in each SRS resource set; or a power control parameter corresponding to each SRS resource in the SRS resource set may be configured in the SRS resource.

Optionally, each SRS resource set may correspond to one or more TRPs. A number of SRS resources included in each SRS resource set may be equal to a number of antenna panels of the terminal device, and each SRS resource may correspond to a channel between one antenna panel of the terminal device and one TRP.

Optionally, the resource of the third SRS and the resource of the fourth SRS may be located in a same SRS resource set, or may be located in different SRS resource sets. This is not specifically limited in this application.

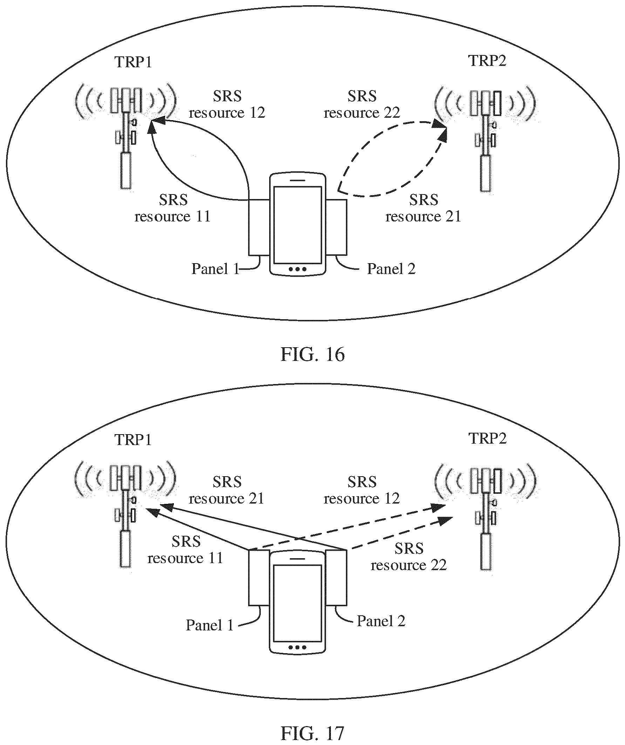

For example, it is assumed that two SRS resource sets, namely, an SRS resource set 1 and an SRS resource set 2, are configured in the configuration information, where the SRS resource set 1 includes an SRS resource 11 and an SRS resource 12, and the SRS resource set 2 includes an SRS resource 21 and an SRS resource 22. As shown in FIG. 16, the terminal device may transmit SRSs to TRP1 on the SRS resource 11 and the SRS resource 12 by using the panel 1, and transmit SRSs to TRP2 on the SRS resource 21 and the SRS resource 22 by using the panel 2. In this case, the third SRS may be the SRS transmitted on the SRS resource 11 and/or the SRS resource 12, the fourth SRS may be the SRS transmitted on the SRS resource 21 and/or the SRS resource 22, and the resource of the third SRS and the resource of the fourth SRS are in different SRS resource sets.

Alternatively, as shown in FIG. 17, the terminal device may transmit an SRS to TRP1 on the SRS resource 11 and an SRS to TRP2 on the SRS resource 12 by using the panel 1, and transmit an SRS to TRP1 on the SRS resource 21 and an SRS to TRP2 on the SRS resource 22 by using the panel 2. When the third SRS is the SRS transmitted on the SRS resource 11, and the fourth SRS is the SRS transmitted on the SRS resource 12, or when the third SRS is the SRS transmitted on the SRS resource 21, and the fourth SRS is the SRS transmitted on the SRS resource 22, the resource of the third SRS and the resource of the fourth SRS are in a same SRS resource set.

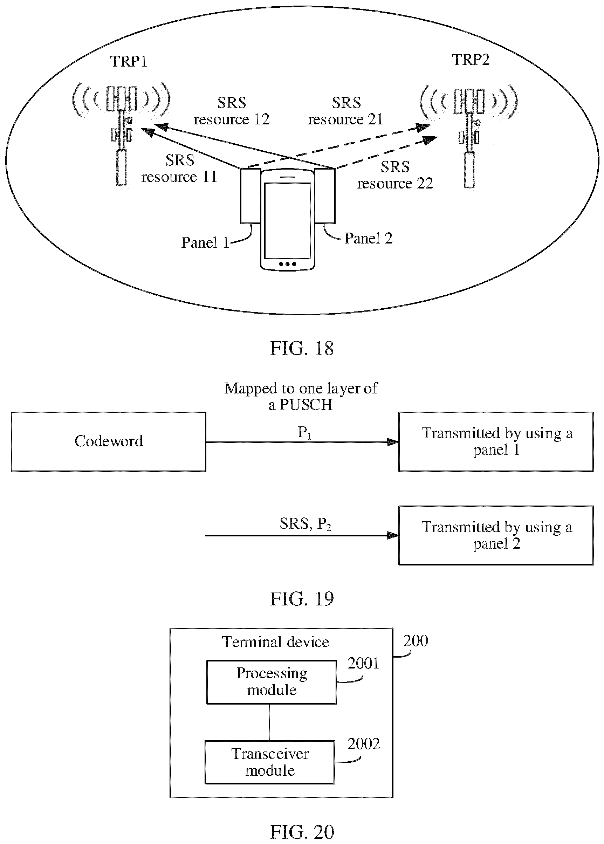

Alternatively, as shown in FIG. 18, the terminal device may transmit an SRS to TRP1 on the SRS resource 11 and an SRS to TRP2 on the SRS resource 21 by using the panel 1, and transmit an SRS to TRP1 on the SRS resource 12 and an SRS to TRP2 on the SRS resource 22 by using the panel 2. When the third SRS is the SRS transmitted on the SRS resource 11, and the fourth SRS is the SRS transmitted on the SRS resource 12, or when the third SRS is the SRS transmitted on the SRS resource 21, and the fourth SRS is the SRS transmitted on the SRS resource 22, the resource of the third SRS and the resource of the fourth SRS are in a same SRS resource set.

Optionally, the power control parameter set corresponding to the panel 1 and the power control parameter set corresponding to the panel 2 each may include receive power expected by the network device, a path loss compensation parameter, a closed-loop power control parameter, uplink path loss estimation, and the like.

Implementation of step S 1403 is similar to implementation of step S1403 for transmitting a PUSCH on an antenna panel, and a difference lies in that the third power and the fourth power in this scenario are calculated by using an SRS power control formula in an existing protocol. For details, refer to the related descriptions of step S1403 for transmitting a PUSCH on an antenna panel. Details are not described herein again.

Because coverage directions of different antenna panels of the terminal device are different, path losses from the different panels to the network device are different. When different antenna panels are used to transmit SRSs by using same transmit power to perform channel detection, channel detection accuracy may be reduced. For example, a PMI, an RI, an MCS, or the like detected by the network device is inaccurate. Based on this solution, in this application, a corresponding power control parameter is configured for each SRS resource, so that power for SRS transmission on different antenna panels can be independently calculated, that is, each antenna panel can perform independent power control, making power control more accurate, thereby improving channel detection accuracy and improving information transmission efficiency.

When an antenna panel is used to transmit a PUCCH, a power control parameter corresponding to the antenna panel may be determined based on a spatial relation of the PUCCH, so as to calculate, based on the power control parameter, power for transmitting the PUCCH on the antenna panel. For a power control formula corresponding to the PUCCH, refer to related descriptions in an existing protocol. Details are not described herein again.

The foregoing mainly uses an example in which two antenna panels are used to transmit information of a same type for description. It may be understood that different antenna panels may be used to transmit information of different types. For example, as shown in FIG. 19, the panel 1 may be used to transmit a PUSCH, and the panel 2 may be used to transmit an SRS. In this case, power control of the panel 1 may be performed based on the foregoing PUSCH-related implementation, and power control of the panel 2 may be performed based on the foregoing SRS-related implementation.

The foregoing mainly uses power control of two antenna panels as an example for description. It may be understood that, when the number of antenna panels is greater than 2, power control may be performed with reference to an implementation of power control of the two antenna panels. Details are not described herein again.

It may be understood that, in the foregoing embodiments, the methods and/or the steps implemented by the terminal device may be implemented by a component (for example, a processor, a chip, a chip system, a circuit, a logical module, or software such as a chip or a circuit) that can be used in the terminal device; or the methods and/or the steps implemented by the network device may be implemented by a component (for example, a processor, a chip, a chip system, a circuit, a logical module, or software such as a chip or a circuit) that can be used in the network device.

The foregoing mainly describes the solutions provided in embodiments of this application from the perspective of interaction between all network elements. Correspondingly, an embodiment of this application further provides a communication apparatus, and the communication apparatus is configured to implement the foregoing methods. The communication apparatus may be the terminal device in the foregoing method embodiment, or an apparatus including the terminal device, or a component that can be used in the terminal device. Alternatively, the communication apparatus may be the network device in the foregoing method embodiment, or an apparatus including the network device, or a component that can be used in the network device.

It may be understood that, to implement the foregoing functions, the communication apparatus includes hardware structures and/or software modules corresponding to the functions. A person skilled in the art should be easily aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

In an implementation scenario, an example in which the communication apparatus is the terminal device in the foregoing method embodiment is used. FIG. 20 is a diagram of a structure of a terminal device 200. The terminal device 200 includes a processing module 2001 and a transceiver module 2002.

In some embodiments, the terminal device 200 may further include a storage module (not shown in FIG. 20), configured to store program instructions and data.

In some embodiments, the transceiver module 2002 may also be referred to as a transceiver unit, configured to implement a sending function and/or a receiving function. The transceiver module 2002 may include a transceiver circuit, a transceiver machine, a transceiver, or a communication interface.

In some embodiments, the transceiver module 2002 may include a receiving module and a sending module, respectively configured to perform a receiving step and a sending step performed by the terminal device in the foregoing method embodiment, and/or configured to support other processes of the technologies described in this specification; and the processing module 2001 may be configured to perform a processing step performed by the terminal device in the foregoing method embodiment, and/or configured to support other processes of the technologies described in this specification.

In a possible implementation,

the processing module 2001 is configured to obtain first information, where the first information is used to determine N antenna panels, the N antenna panels are used to transmit second information, and N is a positive integer greater than or equal to 1; and the transceiver module 2002 is configured to transmit second information by using the N antenna panels.

In another possible implementation,

the processing module 2001 is configured to obtain at least two codewords; the processing module 2001 is further configured to map each of the at least two codewords to at least one layer of one PUSCH; and the transceiver module 2002 is configured to transmit each codeword at the at least one layer of the one PUSCH by using one antenna panel.

Optionally, when the at least two codewords are a first codeword and a second codeword, the first codeword is mapped to n1 layers of a first PUSCH, and the second codeword is mapped to n2 layers of the first PUSCH, the transceiver module 2002 is configured to transmit the first codeword at the n1 layers of the first PUSCH by using one antenna panel in two antenna panels; and the transceiver module 2002 is configured to transmit the second codeword at the n2 layers of the first PUSCH by using the other antenna panel in the two antenna panels, where n1 and n2 are positive integers.

Optionally, when the at least two codewords are a first codeword and a second codeword, the first codeword is mapped to at least one layer of a second PUSCH, and the second codeword is mapped to at least one layer of a third PUSCH, the transceiver module 2002 is configured to transmit the first codeword at the at least one layer of the second PUSCH by using one antenna panel in two antenna panels; and the transceiver module 2002 is configured to transmit the second codeword at the at least one layer of the third PUSCH by using the other antenna panel in the two antenna panels.

Optionally, when the at least two codewords are a first codeword and a second codeword, the first codeword is mapped to n1 layers of a first PUSCH, and the second codeword is mapped to n2 layers of the first PUSCH, the transceiver module 2002 is configured to transmit the first codeword and the second codeword at the n1 layers of the first PUSCH and the n2 layers of the first PUSCH by using a same antenna panel, where n1 and n2 are positive integers, and a sum of n1 and n2 is greater than or equal to a first threshold.

In still another possible implementation, the processing module 2001 is configured to obtain a first parameter corresponding to each of a plurality of antenna panels; the processing module 2001 is further configured to determine, based on the first parameter corresponding to each of the plurality of antenna panels, a power control parameter set corresponding to each of the plurality of antenna panels; the processing module 2001 is further configured to determine, based on the power control parameter set corresponding to each antenna panel, power for transmitting information on each antenna panel; and the transceiver module 2002 is configured to transmit information on each antenna panel based on the power for transmitting information on each antenna panel.

Optionally, the plurality of antenna panels are two antenna panels; and the processing module 2001 is specifically configured to: determine first power based on a power control parameter set corresponding to one antenna panel in the two antenna panels and maximum transmit power of a communication device, where the first power is power for transmitting information on the one antenna panel; and determine second power based on a power parameter set corresponding to the other antenna panel in the two antenna panels and the maximum transmit power of the communication device, where the second power is power for transmitting information on the other antenna panel.

Optionally, the plurality of antenna panels are two antenna panels; and the processing module 2001 is specifically configured to: determine first power based on a power control parameter set of one antenna panel in the two antenna panels and maximum transmit power of the one antenna panel, where the first power is power for transmitting information on the one antenna panel; and determine second power based on a power control parameter set of the other antenna panel in the two antenna panels and maximum transmit power of the other antenna panel, where the second power is power for transmitting information on the other antenna panel.

Optionally, the transceiver module 2002 is specifically configured to: transmit n1 layers of data of a first physical uplink shared channel PUSCH on the one antenna panel based on the first power, and transmit n2 layers of data of the first PUSCH on the other antenna panel based on the second power.

Optionally, the transceiver module 2002 is specifically configured to: transmit a second PUSCH on the one antenna panel based on the first power, and transmit a third PUSCH on the other antenna panel based on the second power.

Optionally, a first parameter corresponding to the one antenna panel is a first SRI, and a first parameter corresponding to the other antenna panel is a second SRI. The processing module 2001 is specifically configured to: determine, based on a PUSCH power control parameter set corresponding to the first SRI, the power control parameter set corresponding to the one antenna panel, and determine, based on a PUSCH power control parameter set corresponding to the second SRI, the power control parameter set corresponding to the other antenna panel.

Optionally, the processing module 2001 is specifically configured to: send a first SRS by using the one antenna panel, to obtain the first SRI corresponding to the first SRS; and send a second SRS by using the other antenna panel, to obtain the second SRI corresponding to the second SRS.

Optionally, the transceiver module 2002 is specifically configured to: transmit a third SRS on the one antenna panel based on the first power, and transmit a fourth SRS on the other antenna panel based on the second power.

Optionally, the processing module 2001 is further configured to receive configuration information from a network device by using the transceiver module 2002, where the configuration information is used to configure at least one SRS resource set, the SRS resource set includes at least one SRS resource, each SRS resource in the SRS resource set corresponds to one power control parameter set, and the resource of the third SRS and the resource of the fourth SRS are SRS resources in the at least one SRS set.

All related content of the steps in the foregoing method embodiments may be cited in function descriptions of the corresponding functional modules. Details are not described herein again.

In this application, the terminal device 200 is presented in a form of obtaining each functional module through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in terms of hardware implementation, a person skilled in the art may figure out that the terminal device 200 may be in a form of the terminal device 30 shown in FIG. 5.

In an example, a function/implementation process of the processing module 2001 in FIG. 20 may be implemented by the processor 301 in the terminal device 30 shown in FIG. 5 by invoking the computer-executable instructions stored in the memory 302, and a function/implementation process of the transceiver module 2002 in FIG. 20 may be implemented by the transceiver 303 in the terminal device 30 shown in FIG. 5.

In some embodiments, when the terminal device 200 in FIG. 20 is a chip or a chip system, a function/implementation process of the transceiver module 2002 may be implemented by using an input/output interface (or a communication interface) of the chip or the chip system, and a function/implementation process of the processing module 2001 may be implemented by using a processor (or a processing circuit) of the chip or the chip system.

Because the terminal device 200 provided in this embodiment may perform the foregoing method, for a technical effect that can be obtained by the terminal device, refer to the foregoing method embodiment. Details are not described herein again.

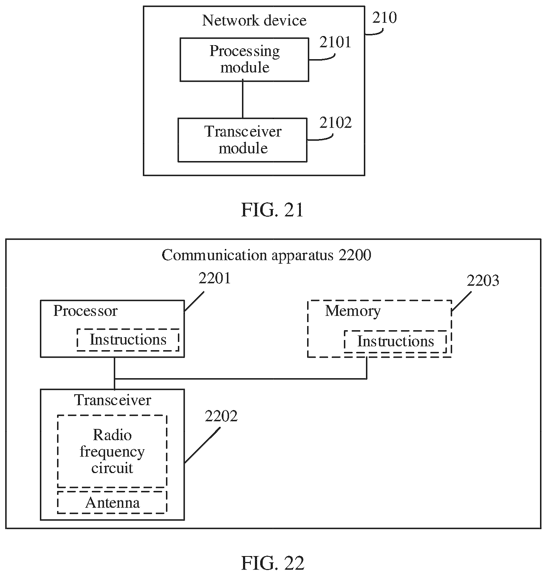

In an implementation scenario, an example in which the communication apparatus is the network device in the foregoing method embodiment is used. FIG. 21 is a diagram of a structure of a network device 210. The network device 210 includes a processing module 2101 and a transceiver module 2102.

In some embodiments, the network device 210 may further include a storage module (not shown in FIG. 21), configured to store program instructions and data.

In some embodiments, the transceiver module 2102 may also be referred to as a transceiver unit, configured to implement a sending function and/or a receiving function. The transceiver module 2102 may include a transceiver circuit, a transceiver machine, a transceiver, or a communication interface.

In some embodiments, the transceiver module 2102 may include a receiving module and a sending module, respectively configured to perform a receiving step and a sending step performed by the network device in the foregoing method embodiment, and/or configured to support other processes of the technologies described in this specification; and the processing module 2101 may be configured to perform a processing step performed by the network device in the foregoing method embodiment, and/or configured to support other processes of the technologies described in this specification.

In a possible implementation,
the processing module 2101 is configured to generate first information, where the first information is used to determine N antenna panels, the N antenna panels are used to transmit second information, and N is a positive integer greater than or equal to 1; and the transceiver module 2102 is configured to send the first information to a terminal device.

In another possible implementation,
the processing module 2101 is configured to obtain a first parameter corresponding to each of a plurality of antenna panels, where the first parameter corresponding to each antenna panel is used to determine a power control parameter set corresponding to each antenna panel, and the power control parameter set corresponding to each antenna panel is used to determine power for transmitting information on each antenna panel; and the transceiver module 2102 is configured to send the first parameter corresponding to each of the plurality of antenna panels to a terminal device.

Optionally, that the processing module 2101 is configured to obtain a first parameter corresponding to each of a plurality of antenna panels includes: The processing module 2101 is configured to: receive, by using the transceiver module 2102, a first SRS sent by the terminal device by using the one antenna panel, and determine the first SRI corresponding to the first SRS; and the processing module 2101 is further configured to: receive, by using the transceiver module 2102, a second SRS sent by the terminal device by using the other antenna panel, and determine the second SRI corresponding to the second SRS.

Optionally, that the transceiver module 2102 is configured to send the first parameter corresponding to each of the plurality of antenna panels to a terminal device includes: The transceiver module 2102 is configured to send configuration information to the terminal device, where the configuration information is used to configure at least one SRS resource set, the SRS resource set includes at least one SRS resource, each SRS resource in the SRS resource set corresponds to one power control parameter set, and the resource of the third SRS and the resource of the fourth SRS are SRS resources in the at least one SRS set.

All related content of the steps in the foregoing method embodiments may be cited in function descriptions of the corresponding functional modules. Details are not described herein again.

In this application, the network device 210 is presented in a form of obtaining each functional module through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in terms of hardware implementation, a person skilled in the art may figure out that the network device 210 may be in a form of the network device 20 shown in FIG. 5.

In an example, a function/implementation process of the processing module 2101 in FIG. 21 may be implemented by the processor 201 in the network device 20 shown in FIG. 5 by invoking the computer-executable instructions stored in the memory 202, and a function/implementation process of the transceiver module 2102 in FIG. 21 may be implemented by the transceiver 203 in the network device 20 shown in FIG. 5.

In some embodiments, when the network device 210 in FIG. 21 is a chip or a chip system, a function/implementation process of the transceiver module 2102 may be implemented by using an input/output interface (or a communication interface) of the chip or the chip system, and a function/implementation process of the processing module 2101 may be implemented by using a processor (or a processing circuit) of the chip or the chip system.

Because the network device 210 provided in this embodiment may perform the foregoing method, for a technical effect that can be obtained by the terminal device, refer to the foregoing method embodiment. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read through another component) and transmit the computer-executable instructions to the processor.

In still another possible implementation, the communication apparatus further includes a communication interface. The communication interface is configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

In some embodiments, an embodiment of this application further provides a communication apparatus. The communication apparatus includes an interface circuit and a logic circuit. The interface circuit is configured to input and/or output information. The logic circuit is configured to perform the method in any one of the foregoing method embodiments, and process and/or generate output information based on an input.

In a possible product form, the terminal device and the network device in embodiments of this application each may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the network device and the terminal device in embodiments of this application each may be implemented through a general bus architecture. For ease of description, FIG. 22 is a diagram of a structure of a communication apparatus 2200 according to an embodiment of this application. The communication apparatus 2200 includes a processor 2201 and a transceiver 2202. The communication apparatus 2200 may be a network device, a terminal device, or a chip in the network device or the terminal device. FIG. 22 shows only main components of the communication apparatus 2200. In addition to the processor 2201 and the transceiver 2202, the communication apparatus may further include a memory 2203 and an input/output apparatus (which is not shown in the figure).

The processor 2201 is mainly configured to: process a communication protocol and communication data, control the entire communication apparatus, execute a software program, and process data of the software program. The memory 2203 is mainly configured to store a software program and data. The transceiver 2202 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data that is input by a user and output data to the user.

The processor 2201, the transceiver 2202, and the memory 2203 may be connected through a communication bus.

After the communication apparatus is powered on, the processor 2201 may read the software program in the memory 2203, interpret and execute instructions of the software program, and process data of the software program. When data needs to be sent wirelessly, the processor 2201 performs baseband processing on the to-be-sent data, and then outputs a baseband signal to a radio frequency circuit; and the radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 2201; and the processor 2201 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiment. Details are not described herein again.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application has been described with reference to specific features and embodiments thereof, it is obvious that various modifications and combinations may be made to this application without departing from the spirit and scope of this application. Correspondingly, this specification and the accompanying drawings are merely example descriptions of this application defined by the appended claims, and are deemed to have covered any and all modifications, variations, combinations, or equivalents that fall within the scope of this application. Obviously, a person skilled in the art can make various modifications and variations to this application without departing from the spirit and scope of this application. This application is also intended to cover these modifications and variations provided that they fall within the scope of protection defined by the following claims and their equivalent technologies.

## Claims

1. A communication method, wherein the method comprises:

   obtaining a first parameter corresponding to each of a plurality of antenna panels;
   determining, based on the first parameter corresponding to each of the plurality of antenna panels, a power control parameter set corresponding to each of the plurality of antenna panels;
   determining, based on the power control parameter set corresponding to each antenna panel, power for transmitting information on each antenna panel; and
   transmitting information on each antenna panel based on the power for transmitting information on each antenna panel.

2. The method according to claim 1, wherein the plurality of antenna panels are two antenna panels; and the determining, based on the power control parameter set corresponding to each antenna panel, power for transmitting information on each antenna panel comprises:

   determining first power based on a power control parameter set corresponding to one antenna panel in the two antenna panels and maximum transmit power of a communication device, wherein the first power is power for transmitting information on the one antenna panel; and
   determining second power based on a power parameter set corresponding to the other antenna panel in the two antenna panels and the maximum transmit power of the communication device, wherein the second power is power for transmitting information on the other antenna panel.

3. The method according to claim 2, wherein the power control parameter set corresponding to the one antenna panel is used to determine third power, and the power parameter set corresponding to the other antenna panel is used to determine fourth power; and

when a sum of the third power and the fourth power is less than or equal to the maximum transmit power of the communication device, the first power is equal to the third power, and the second power is equal to the fourth power; or

when the sum of the third power and the fourth power is greater than the maximum transmit power of the communication device, the first power is determined based on the third power, the fourth power, and the maximum transmit power, and/or the second power is determined based on the third power, the fourth power, and the maximum transmit power.

4. The method according to claim 3, wherein when the sum of the third power and the fourth power is greater than the maximum transmit power of the communication device, the maximum transmit power, the third power, the first power, the fourth power, and the second power satisfy the following formula:

$$P_1 = P_3 \cdot P_{max} / (P_3 + P_4), P_2 = P_4 \cdot P_{max} / (P_3 + P_4);$$

or

$$P_1 = P_3 - \left[ (P_3 + P_4 - P_{max})/2 \right], P_2 = P_4 - \left[ (P_3 + P_4 - P_{max}) \right]/2,$$

wherein
$P_{max}$ is the maximum transmit power, $P_1$ is the first power, $P_2$ is the second power, $P_3$ is the third power, and $P_4$ is the fourth power.

5. The method according to claim 2, wherein the power control parameter set corresponding to the one antenna panel is used to determine third power, and the power parameter set corresponding to the other antenna panel is used to determine fourth power; and

when a sum of the third power and the fourth power is greater than the maximum transmit power of the communication device, and the third power is less than the fourth power, the first power is equal to the third power, and the second power satisfies the following formula:

$$P_2 = P_4 - (P_3 + P_4 - P_{max}),$$

wherein
$P_{max}$ is the maximum transmit power, $P_1$ is the first power, $P_2$ is the second power, $P_3$ is the third power, and $P_4$ is the fourth power.

6. The method according to claim 2, wherein the power control parameter set corresponding to the one antenna panel is used to determine third power, and the power parameter set corresponding to the other antenna panel is used to determine fourth power; and

when a sum of the third power and the fourth power is greater than the maximum transmit power of the communication device, and a path loss of the one antenna panel is less than a path loss of the other antenna panel, the first power is equal to the third power, and the second power satisfies the following formula:

$$P_2 = P_4 - (P_3 + P_4 - P_{max}),$$

wherein
$P_{max}$ is the maximum transmit power, $P_1$ is the first power, $P_2$ is the second power, $P_3$ is the third power, and $P_4$ is

the fourth power.

7. The method according to claim 1, wherein the plurality of antenna panels are two antenna panels; and the determining, based on the power control parameter set corresponding to each antenna panel, power for transmitting information on each antenna panel comprises:

determining first power based on a power control parameter set of one antenna panel in the two antenna panels and maximum transmit power of the one antenna panel, wherein the first power is power for transmitting information on the one antenna panel; and
determining second power based on a power control parameter set of the other antenna panel in the two antenna panels and maximum transmit power of the other antenna panel, wherein the second power is power for transmitting information on the other antenna panel.

8. The method according to claim 7, wherein the first power is a smallest value in third power and the maximum transmit power of the one antenna panel, wherein the third power is determined based on the power control parameter set of the one antenna panel; and
the second power is a smallest value in fourth power and the maximum transmit power of the other antenna panel, wherein the fourth power is determined based on the power control parameter set of the other antenna panel.

9. The method according to any one of claims 2 to 8, wherein the transmitting information on each antenna panel based on the power for transmitting information on each antenna panel comprises:
transmitting n1 layers of data of a first physical uplink shared channel PUSCH on the one antenna panel based on the first power, and transmitting n2 layers of data of the first PUSCH on the other antenna panel based on the second power.

10. The method according to claim 9, wherein the first power is evenly allocated to n1 layers of the first PUSCH, and the second power is evenly allocated to n2 layers of the first PUSCH.

11. The method according to claim 9 or 10, wherein when n1 is greater than a second threshold, the power control parameter set corresponding to the one antenna panel does not comprise a modulation and coding scheme MCS used to transmit the n1 layers of data of the first PUSCH, or power control of the one antenna panel is unrelated to the MCS used to transmit the n1 layers of data of the first PUSCH.

12. The method according to any one of claims 2 to 8, wherein the transmitting information on each antenna panel based on the power for transmitting information on each antenna panel comprises:
transmitting a second PUSCH on the one antenna panel based on the first power, and transmitting a third PUSCH on the other antenna panel based on the second power.

13. The method according to claim 12, wherein the first power is evenly allocated to L1 layers of the second PUSCH, and the second power is evenly allocated to L2 layers of the third PUSCH.

14. The method according to claim 12 or 13, wherein when a number L1 of layers of the second PUSCH is greater than a second threshold, the power control parameter set of the one antenna panel does not comprise an MCS used to transmit the second PUSCH, or power control of the one antenna panel is unrelated to the MCS used to transmit the second PUSCH.

15. The method according to any one of claims 2 to 14, wherein a first parameter corresponding to the one antenna panel is a first sounding reference signal resource indicator SRI, and a first parameter corresponding to the other antenna panel is a second SRI; and
the determining, based on the first parameter corresponding to each of the plurality of antenna panels, a power control parameter set corresponding to each of the plurality of antenna panels comprises:
determining, based on a PUSCH power control parameter set corresponding to the first SRI, the power control parameter set corresponding to the one antenna panel, and determining, based on a PUSCH power control parameter set corresponding to the second SRI, the power control parameter set corresponding to the other antenna panel.

16. The method according to claim 15, wherein the obtaining a first parameter corresponding to each of a plurality of antenna panels comprises:
sending a first SRS by using the one antenna panel, to obtain the first SRI corresponding to the first SRS; and sending a second SRS by using the other antenna panel, to obtain the second SRI corresponding to the second SRS.

17. The method according to any one of claims 2 to 8, wherein the transmitting information on each antenna panel based on the power for transmitting information on each antenna panel comprises:
transmitting a third SRS on the one antenna panel based on the first power, and transmitting a fourth SRS on the other antenna panel based on the second power.

18. The method according to claim 17, wherein the power control parameter set corresponding to the one antenna panel is a power control parameter set corresponding to a resource of the third SRS, and the power control parameter set corresponding to the other antenna panel is a power control parameter set corresponding to a resource of the fourth SRS.

19. The method according to claim 18, wherein the obtaining a first parameter corresponding to each of a plurality of antenna panels comprises:
receiving configuration information from a network device, wherein the configuration information is used to configure at least one SRS resource set, the SRS resource set comprises at least one SRS resource, each SRS resource in the SRS resource set corresponds to one power control parameter set, and the resource of the third SRS and the resource of the fourth SRS are SRS resources in the at least one SRS set.

20. A communication method, wherein the method comprises:

   obtaining a first parameter corresponding to each of a plurality of antenna panels, wherein the first parameter corresponding to each antenna panel is used to determine a power control parameter set corresponding to each antenna panel, and the power control parameter set corresponding to each antenna panel is used to determine power for transmitting information on each antenna panel; and
   sending the first parameter corresponding to each of the plurality of antenna panels to a terminal device.

21. The method according to claim 20, wherein the plurality of antenna panels are two antenna panels, a first parameter corresponding to one antenna panel in the two antenna panels is a first sounding reference signal resource indicator SRI, and a first parameter corresponding to the other antenna panel in the two antenna panels is a second SRI.

22. The method according to claim 21, wherein the obtaining a first parameter corresponding to each of a plurality of antenna panels comprises:
receiving a first sounding reference signal SRS sent by the terminal device by using the one antenna panel, and determining the first SRI corresponding to the first SRS; and receiving a second SRS sent by the terminal device by using the other antenna panel, and determining the second SRI corresponding to the second SRS.

23. The method according to claim 20, wherein the plurality of antenna panels are two antenna panels, one antenna panel in the two antenna panels is used to transmit a third SRS, and the other antenna panel in the two antenna panels is used to transmit a fourth SRS; and
a first parameter corresponding to the one antenna panel is a resource of the third SRS, and a first parameter corresponding to the other antenna panel is a resource of the fourth SRS.

24. The method according to claim 23, wherein the sending the first parameter corresponding to each of the plurality of antenna panels to a terminal device comprises:
sending configuration information to the terminal device, wherein the configuration information is used to configure at least one SRS resource set, the SRS resource set comprises at least one SRS resource, each SRS resource in the SRS resource set corresponds to one power control parameter set, and the resource of the third SRS and the resource of the fourth SRS are SRS resources in the at least one SRS set.

25. A communication apparatus, wherein the communication apparatus comprises a processing module and a transceiver module, wherein

   the processing module is configured to obtain a first parameter corresponding to each of a plurality of antenna panels;
   the processing module is further configured to determine, based on the first parameter corresponding to each of the plurality of antenna panels, a power control parameter set corresponding to each of the plurality of antenna panels;

the processing module is further configured to determine, based on the power control parameter set corresponding to each antenna panel, power for transmitting information on each antenna panel; and
the transceiver module is configured to transmit information on each antenna panel based on the power for transmitting information on each antenna panel.

26. The communication apparatus according to claim 25, wherein the plurality of antenna panels are two antenna panels; and that the processing module is further configured to determine, based on the power control parameter set corresponding to each antenna panel, power for transmitting information on each antenna panel comprises:

the processing module is further configured to determine first power based on a power control parameter set corresponding to one antenna panel in the two antenna panels and maximum transmit power of a communication device, wherein the first power is power for transmitting information on the one antenna panel; and
the processing module is further configured to determine second power based on a power parameter set corresponding to the other antenna panel in the two antenna panels and the maximum transmit power of the communication device, wherein the second power is power for transmitting information on the other antenna panel.

27. The communication apparatus according to claim 26, wherein the power control parameter set corresponding to the one antenna panel is used to determine third power, and the power parameter set corresponding to the other antenna panel is used to determine fourth power; and

when a sum of the third power and the fourth power is less than or equal to the maximum transmit power of the communication device, the first power is equal to the third power, and the second power is equal to the fourth power; or
when the sum of the third power and the fourth power is greater than the maximum transmit power of the communication device, the first power is determined based on the third power, the fourth power, and the maximum transmit power, and/or the second power is determined based on the third power, the fourth power, and the maximum transmit power.

28. The communication apparatus according to claim 27, wherein when the sum of the third power and the fourth power is greater than the maximum transmit power of the communication device, the maximum transmit power, the third power, the first power, the fourth power, and the second power satisfy the following formula:

$$P_1 = P_3 \cdot P_{\max} / (P_3 + P_4), P_2 = P_4 \cdot P_{\max} / (P_3 + P_4);$$

or

$$P_1 = P_3 - \left[ (P_3 + P_4 - P_{\max}) / 2 \right], P_2 = P_4 - \left[ (P_3 + P_4 - P_{\max}) \right] / 2,$$

wherein
$P_{\max}$ is the maximum transmit power, $P_1$ is the first power, $P_2$ is the second power, $P_3$ is the third power, and $P_4$ is the fourth power.

29. The communication apparatus according to claim 26, wherein the power control parameter set corresponding to the one antenna panel is used to determine third power, and the power parameter set corresponding to the other antenna panel is used to determine fourth power; and

when a sum of the third power and the fourth power is greater than the maximum transmit power of the communication device, and the third power is less than the fourth power, the first power is equal to the third power, and the second power satisfies the following formula:

$$P_2 = P_4 - (P_3 + P_4 - P_{\max}),$$

wherein
$P_{\max}$ is the maximum transmit power, $P_1$ is the first power, $P_2$ is the second power, $P_3$ is the third power, and $P_4$ is

the fourth power.

30. The communication apparatus according to claim 26, wherein the power control parameter set corresponding to the one antenna panel is used to determine third power, and the power parameter set corresponding to the other antenna panel is used to determine fourth power; and

when a sum of the third power and the fourth power is greater than the maximum transmit power of the communication device, and a path loss of the one antenna panel is less than a path loss of the other antenna panel, the first power is equal to the third power, and the second power satisfies the following formula:

$$P_2 = P_4 - \left( P_3 + P_4 - P_{\max} \right),$$

wherein
$P_{\max}$ is the maximum transmit power, $P_1$ is the first power, $P_2$ is the second power, $P_3$ is the third power, and $P_4$ is the fourth power.

31. The communication apparatus according to claim 25, wherein the plurality of antenna panels are two antenna panels; and that the processing module is further configured to determine, based on the power control parameter set corresponding to each antenna panel, power for transmitting information on each antenna panel comprises:

the processing module is further configured to determine first power based on a power control parameter set of one antenna panel in the two antenna panels and maximum transmit power of the one antenna panel, wherein the first power is power for transmitting information on the one antenna panel; and
the processing module is further configured to determine second power based on a power control parameter set of the other antenna panel in the two antenna panels and maximum transmit power of the other antenna panel, wherein the second power is power for transmitting information on the other antenna panel.

32. The communication apparatus according to claim 31, wherein the first power is a smallest value in third power and the maximum transmit power of the one antenna panel, wherein the third power is determined based on the power control parameter set of the one antenna panel; and
the second power is a smallest value in fourth power and the maximum transmit power of the other antenna panel, wherein the fourth power is determined based on the power control parameter set of the other antenna panel.

33. The communication apparatus according to any one of claims 26 to 32, wherein that the transceiver module is configured to transmit information on each antenna panel based on the power for transmitting information on each antenna panel comprises:
the transceiver module is configured to: transmit n1 layers of data of a first physical uplink shared channel PUSCH on the one antenna panel based on the first power, and transmit n2 layers of data of the first PUSCH on the other antenna panel based on the second power.

34. The communication apparatus according to claim 33, wherein the first power is evenly allocated to n1 layers of the first PUSCH, and the second power is evenly allocated to n2 layers of the first PUSCH.

35. The communication apparatus according to claim 33 or 34, wherein when n1 is greater than a second threshold, the power control parameter set corresponding to the one antenna panel does not comprise a modulation and coding scheme MCS used to transmit the n1 layers of data of the first PUSCH, or power control of the one antenna panel is unrelated to the MCS used to transmit the n1 layers of data of the first PUSCH.

36. The communication apparatus according to any one of claims 26 to 32, wherein that the transceiver module is configured to transmit information on each antenna panel based on the power for transmitting information on each antenna panel comprises:
the transceiver module is configured to: transmit a second PUSCH on the one antenna panel based on the first power, and transmit a third PUSCH on the other antenna panel based on the second power.

37. The communication apparatus according to claim 36, wherein the first power is evenly allocated to L1 layers of the second PUSCH, and the second power is evenly allocated to L2 layers of the third PUSCH.

**38.** The communication apparatus according to claim 36 or 37, wherein when a number L1 of layers of the second PUSCH is greater than a second threshold, the power control parameter set of the one antenna panel does not comprise an MCS used to transmit the second PUSCH, or power control of the one antenna panel is unrelated to the MCS used to transmit the second PUSCH.

**39.** The communication apparatus according to any one of claims 26 to 38, wherein a first parameter corresponding to the one antenna panel is a first sounding reference signal resource indicator SRI, and a first parameter corresponding to the other antenna panel is a second SRI; and
that the processing module is further configured to determine, based on the first parameter corresponding to each of the plurality of antenna panels, a power control parameter set corresponding to each of the plurality of antenna panels comprises:
the processing module is further configured to: determine, based on a PUSCH power control parameter set corresponding to the first SRI, the power control parameter set corresponding to the one antenna panel, and determine, based on a PUSCH power control parameter set corresponding to the second SRI, the power control parameter set corresponding to the other antenna panel.

**40.** The communication apparatus according to claim 39, wherein that the processing module is configured to obtain a first parameter corresponding to each of a plurality of antenna panels comprises:
the processing module is configured to: send a first SRS by using the one antenna panel, to obtain the first SRI corresponding to the first SRS; and send a second SRS by using the other antenna panel, to obtain the second SRI corresponding to the second SRS.

**41.** The communication apparatus according to any one of claims 26 to 32, wherein that the transceiver module is configured to transmit information on each antenna panel based on the power for transmitting information on each antenna panel comprises:
the transceiver module is configured to: transmit a third SRS on the one antenna panel based on the first power, and transmit a fourth SRS on the other antenna panel based on the second power.

**42.** The communication apparatus according to claim 41, wherein the power control parameter set corresponding to the one antenna panel is a power control parameter set corresponding to a resource of the third SRS, and the power control parameter set corresponding to the other antenna panel is a power control parameter set corresponding to a resource of the fourth SRS.

**43.** The communication apparatus according to claim 42, wherein that the processing module is configured to obtain a first parameter corresponding to each of a plurality of antenna panels comprises:
the processing module is configured to receive configuration information from a network device by using the transceiver module, wherein the configuration information is used to configure at least one SRS resource set, the SRS resource set comprises at least one SRS resource, each SRS resource in the SRS resource set corresponds to one power control parameter set, and the resource of the third SRS and the resource of the fourth SRS are SRS resources in the at least one SRS set.

**44.** A communication apparatus, wherein the communication apparatus comprises a processing module and a transceiver module, wherein

the processing module is configured to obtain a first parameter corresponding to each of a plurality of antenna panels, wherein the first parameter corresponding to each antenna panel is used to determine a power control parameter set corresponding to each antenna panel, and the power control parameter set corresponding to each antenna panel is used to determine power for transmitting information on each antenna panel; and
the transceiver module is configured to send the first parameter corresponding to each of the plurality of antenna panels to a terminal device.

**45.** The communication apparatus according to claim 44, wherein the plurality of antenna panels are two antenna panels, a first parameter corresponding to one antenna panel in the two antenna panels is a first sounding reference signal resource indicator SRI, and a first parameter corresponding to the other antenna panel in the two antenna panels is a second SRI.

**46.** The communication apparatus according to claim 45, wherein that the processing module is configured to obtain a first parameter corresponding to each of a plurality of antenna panels comprises:

the processing module is configured to: receive, by using the transceiver module, a first sounding reference signal SRS sent by the terminal device by using the one antenna panel, and determine the first SRI corresponding to the first SRS; and the processing module is further configured to: receive, by using the transceiver module, a second SRS sent by the terminal device by using the other antenna panel, and determine the second SRI corresponding to the second SRS.

47. The communication apparatus according to claim 44, wherein the plurality of antenna panels are two antenna panels, one antenna panel in the two antenna panels is used to transmit a third SRS, and the other antenna panel in the two antenna panels is used to transmit a fourth SRS; and

a first parameter corresponding to the one antenna panel is a resource of the third SRS, and a first parameter corresponding to the other antenna panel is a resource of the fourth SRS.

48. The communication apparatus according to claim 47, wherein that the transceiver module is configured to send the first parameter corresponding to each of the plurality of antenna panels to a terminal device comprises:

the transceiver module is configured to send configuration information to the terminal device, wherein the configuration information is used to configure at least one SRS resource set, the SRS resource set comprises at least one SRS resource, each SRS resource in the SRS resource set corresponds to one power control parameter set, and the resource of the third SRS and the resource of the fourth SRS are SRS resources in the at least one SRS set.

49. A communication system, wherein the communication system comprises the communication apparatus according to any one of claims 25 to 43 and the communication apparatus according to any one of claims 44 to 48.

50. A communication apparatus, wherein the communication apparatus comprises at least one processor; and the processor is configured to execute a computer program or instructions, to implement the method according to any one of claims 1 to 19 or the method according to any one of claims 20 to 24.

51. A computer-readable storage medium, wherein the computer-readable storage medium stores a computer program or instructions, and when the computer program or the instructions are executed by a communication apparatus, the method according to any one of claims 1 to 19 or the method according to any one of claims 20 to 24 is implemented.

52. A computer program product, wherein the computer program product comprises computer instructions; and when some or all of the computer instructions are run on a computer, the method according to any one of claims 1 to 19 or the method according to any one of claims 20 to 24 is performed.

TB → CRC adding → Channel coding → Rate matching → Scrambling → Modulation → Layer mapping → Precoding → Time-frequency resource mapping → Conversion from a frequency domain signal to a time domain signal → Sending

FIG. 1a

Mapped to three layers
of a first PUSCH

| Codeword | P/3 → | Transmitted by using an antenna panel |
| | P/3 → | |
| | P/3 → | |

FIG. 1b

Mapped to three layers
of a PUSCH

| Codeword | One layer, P/3 → | Transmitted by using an antenna panel 1 |
| | | |
| | One layer, P/3 → | Transmitted by using an antenna panel 2 |
| | One layer, P/3 → | |

FIG. 2

FIG. 3

FIG. 4

FIG. 5

S601 — A terminal device obtains first information, where the first information is used to determine N antenna panels

S602 — Transmit second information by using the N antenna panels

FIG. 6

| Terminal device | Network device |
| --- | --- |
| Panel 1 | Panel 2 | |

S701: At least one SRS

S701: At least one SRS

S702: Determine a channel matrix $H_1$ corresponding to the panel 1 and a channel matrix $H_2$ corresponding to the panel 2

S703: Determine, based on the channel matrix $H_1$ corresponding to the panel 1 and the channel matrix $H_2$ corresponding to the panel 2, $MCS_1$ corresponding to the panel 1 and $MCS_2$ corresponding to the panel 2

S704: At least one piece of signaling, including an MCS field 1 (indicating MCS1) and an MCS field 2 (indicating MCS2)

S705: Determine, based on the MCS field 1, whether the panel 1 is available, and determine, based on the MCS field 2, whether the panel 2 is available

S706: PUSCH (transmitted by using an available antenna panel)

FIG. 7

Terminal device

Panel 1 | Panel 2 | Network device

S801: At least one SRS

S802: Determine a channel matrix $H_1$ corresponding to the panel 1

S803: Determine, based on the channel matrix $H_1$ corresponding to the panel 1, $MCS_1$ corresponding to the panel 1

S804: Signaling A and signaling B, where the signaling A includes an MCS field 1 (indicating MCS1), and the signaling B includes an identifier indicating whether the panel 2 is available

S805: Determine, based on the MCS field 1, whether the panel 1 is available, and determine, based on the identifier in the signaling B, whether the panel 2 is available

S806: PUSCH (the panel 1 is available)

S806: PUCCH or SRS (the panel 2 is available)

FIG. 8

S901  A terminal device obtains at least two codewords

S902  Map each codeword to at least one layer of at least one PUSCH

S903  Transmit each codeword at the at least one layer of the PUSCH by using one antenna panel.

FIG. 9

| | Mapped to one layer of a first PUSCH | |
|---|---|---|
| First codeword | → | Transmitted by using a panel 1 |

| | Mapped to two layers of the first PUSCH | |
|---|---|---|
| Second codeword | → | Transmitted by using a panel 2 |

FIG. 10

| | Mapped to two layers of a first PUSCH | |
|---|---|---|
| First codeword | → | |
| | Mapped to three layers of the first PUSCH | Transmitted by using a panel 1 |
| Second codeword | → | |

FIG. 11

| | Mapped to two layers of a second PUSCH | |
|---|---|---|
| First codeword | → | Transmitted by using a panel 1 |

| | Mapped to two layers of a third PUSCH | |
|---|---|---|
| Second codeword | → | Transmitted by using a panel 2 |

FIG. 12

| First codeword | Mapped to one layer of a PUSCH #a → | Transmitted by using a panel 1 |

| Second codeword | Mapped to one layer of the PUSCH #a → | Transmitted by using a panel 2 |

| Third codeword | Mapped to two layers of the PUSCH #a → | |

FIG. 13a

| First codeword | Mapped to three layers of a PUSCH #b → → → | Transmitted by using a panel 1 |

| Second codeword | Mapped to two layers of a PUSCH #c → → | Transmitted by using a panel 2 |

| Third codeword | Mapped to three layers of the PUSCH #c → → → | |

FIG. 13b

| S1401 | A terminal device obtains a first parameter corresponding to each of a plurality of antenna panels |
|---|---|

| S1402 | The terminal device determines, based on the first parameter corresponding to each of the plurality of antenna panels, a power control parameter set corresponding to each of the plurality of antenna panels |
|---|---|

| S1403 | The terminal device determines, based on the power control parameter set corresponding to each antenna panel, power for transmitting information on each antenna panel |
|---|---|

| S1404 | The terminal device transmits information on each antenna panel based on the power for transmitting information on each antenna panel |
|---|---|

FIG. 14

Mapped to one layer of a first PUSCH

| First codeword group | $P_1$ → | Transmitted by using a panel 1 |
|---|---|---|

Mapped to two layers of the first PUSCH

| Second codeword group | $P_2/2$ → $P_2/2$ → | Transmitted by using a panel 2 |
|---|---|---|

FIG. 15

FIG. 16

FIG. 17

FIG. 18

FIG. 19

FIG. 20

Network device

Processing module — 2101

210

Transceiver module — 2102

FIG. 21

Communication apparatus 2200

Processor 2201

Instructions

Memory 2203

Instructions

Transceiver

Radio frequency circuit

2202

Antenna

FIG. 22

## INTERNATIONAL SEARCH REPORT

International application No.

**PCT/CN2023/074849**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B H04W H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 面板, 天线, 天线集合, 天线阵列, 功率, 控制, 参数集, 探测, 参考信号, 指示, 索引, 调制, 编码方式, 最大, panel, power, control, parameter, group, set, PCP, PCPG, PCPS, sounding, RS, SRS, SRI, indicator, index, MCS, max

### C. DOCUMENTS CONSIDERED TO BE RELEVANT

| Category* | Citation of document, with indication, where appropriate, of the relevant passages | Relevant to claim No. |
|---|---|---|
| X | CN 110972251 A (HUAWEI TECHNOLOGIES CO., LTD.) 07 April 2020 (2020-04-07) description, paragraphs [0008]-[0093] and [0260]-[0292] | 1-52 |
| A | CN 111083773 A (ZTE CORP.) 28 April 2020 (2020-04-28) entire document | 1-52 |
| A | US 2022393827 A1 (GUANGDONG OPPO MOBILE TELECOMMUNICATIONS CORP., LTD.) 08 December 2022 (2022-12-08) entire document | 1-52 |
| A | VIVO. "Discussion on Enhancements on Multi-Beam Operation" *3GPP TSG RAN WG1 Meeting #95 R1-1812324*, 16 November 2018 (2018-11-16), entire document | 1-52 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2023** | **17 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/074849**

| Patent document cited in search report | | | Publication date (day/month/year) | Patent family member(s) | | | Publication date (day/month/year) |
|---|---|---|---|---|---|---|---|
| CN | 110972251 | A | 07 April 2020 | EP | 3860230 | A1 | 04 August 2021 |
| | | | | WO | 2020063923 | A1 | 02 April 2020 |
| | | | | US | 2021235386 | A1 | 29 July 2021 |
| CN | 111083773 | A | 28 April 2020 | WO | 2021068881 | A1 | 15 April 2021 |
| | | | | EP | 4044695 | A1 | 17 August 2022 |
| US | 2022393827 | A1 | 08 December 2022 | WO | 2021163990 | A1 | 26 August 2021 |
| | | | | EP | 4106447 | A1 | 21 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210129284